# EUROPEAN PATENT SPECIFICATION

(11) **EP 4 167 810 B1**
(45) Date of publication and mention of the grant of the patent: **17.09.2025**
(21) Application number: 21742492.8
(22) Date of filing: 18.06.2021
(51) Int. Cl.: A47J 31/44

(54) **COFFEE MACHINE WITH AUTOMATIC LOCKING OF THE FILTER-HOLDER**
KAFFEEMASCHINE MIT AUTOMATISCHER VERRIEGELUNG DES FILTERHALTERS
MACHINE À CAFÉ À VERROUILLAGE AUTOMATIQUE DU PORTE-FILTRE

(30) Priority: 19.06.2020 EP 20181248; 13.10.2020 IT 202000024139
(43) Date of publication of application: 26.04.2023
(73) Proprietor: VEA GROUP S.P.A., 24121 Bergamo (IT)
(72) Inventor: DOGLIONI MAJER, Andrea, 24040 Chignolo d'Isola (BG) (IT); IEMMA, Lorenzo, 24040 Chignolo d'Isola (BG) (IT); CERIANI, Alessandro, 24040 Chignolo d'Isola (BG) (IT)
(74) Representative: Studio Torta S.p.A.
(86) International application number: PCT/IB2021/055402
(87) International publication number: WO 2021/255704

(56) References cited:
- EP-A1- 0 623 302
- EP-A1- 2 071 986
- EP-A1- 3 037 023
- WO-A1-2015/024798
- WO-A1-2020/049495

## Description

### Cross-reference to related applications

This patent application claims priorities to European patent application no. 20181248.4 filed on 19.06.2020 and Italian patent application no. 102020000024139 filed on 13.10.2020.

### Technical Field of the Invention

The present invention relates to the field of machines for preparing coffee or similar beverages, and in particular it relates to a semi-automatic coffee machine for professional use in bars or for domestic use.

### Background of the Invention

As is well known, semi-automatic coffee machines comprise those machines in which a coffee beverage is largely made manually by an operator, while other operations are controlled automatically by an electronic control unit.

A typical operation that has to be carried out manually is, for example, loading the ground coffee, which normally requires the operator to remove the so-called filter-holder from the machine to load a dose of loose ground coffee or a pod or a disposable capsule into the filter-holder, and then to fluidtight couple the filter-holder to an annular supporting body which forms an outlet of a hot water injection assembly of the coffee machine.

Another operation that is controlled directly by the operator, normally by means of a button, is the start and, vice versa, the stop of the beverage delivery. In some types of semi-automatic machines, the beverage delivery is stopped automatically, based on a setting of the "length" of the coffee to be delivered in the cup.

In general, the filter-holder is coupled to the annular supporting body by means of a bayonet coupling device formed of at least two radial fins carried by the filter-holder and a corresponding number of slots formed in the annular supporting body.

Each fin, or, alternatively, each slot, is partially delimited by an inclined plane, which, when the filter-holder is coupled to the annular supporting body and the fins are displaced along the respective slots, engages an abutment plane formed on the corresponding slot, or, respectively, on the corresponding fin, so as to cause an axial displacement of the filter-holder towards the annular supporting body and consequent fluid-tight coupling of a free edge of the filter-holder against a frontal seal carried by the annular supporting body.

From the operator's point of view, coupling the filter-holder to the supporting annular body of the water injection assembly involves two sequential operations in order to bring the filter-holder first into an insertion configuration, in which the filter-holder is inserted in the annular body, and then into a tight coupling configuration, in which the filter-holder is tight-coupled onto the annular supporting body.

The insertion configuration is usually reached by vertically moving the filter-holder from bottom upwards so that the filter-holder is coupled frontally to the annular supporting body and the fins are aligned with corresponding slots. Typically, in the insertion configuration, the filter-holder is angularly offset (leftwards) from a frontal configuration with respect to the operator.

The tight coupling configuration is instead reached by rotating the filter-holder, typically by about 30°-40° and anticlockwise, starting from the insertion configuration, so as to move the fins along the slots until the free edge of the filter-holder is compressed against the frontal seal of the annular supporting body. Resultingly, in the tight coupling configuration the filter-holder is angularly offset from the insertion configuration and is typically placed frontally to the operator.

EP 3 037 023 A1 discloses a connecting device for connecting a filter-holder of an espresso machine to a hot water dispensing group for producing a beverage. The filter-holder comprises a body, provided with a handle, with an inner cavity delimited by a cylindrical wall and defining a housing for a filter, to be loaded with ground coffee. The cavity is open at an end facing the dispensing group, is closed with a bottom wall at the opposite end, and is provided with a beverage dispensing opening formed in the bottom wall. The filter-holder further comprises a pair of diametrically opposed fins projecting radially from the side wall and extending circumferentially outside the cavity. The water dispensing group comprises an opening designed to accommodate the open end of the inner cavity of body of the filter-holder and a pair of helical guides extending around an axis orthogonal to the plane on which the filter-holder connects to the water dispensing group. The helical guides are arranged around the opening and are each designed to accommodate thereon, by means of a bayonet coupling, a corresponding fin of the pair of fins of the filter-holder. The connecting device comprises a plate-like element fixed to the water delivery group and provided with an opening aligned with the opening of the water dispensing group and with a tubular cavity, which is open at both axial ends and is aligned with the axial openings and in a distal position relative to the opening of the water dispensing group. The connecting device further comprises an annular element which is arranged inside the tubular cavity of the plate-like element so as to freely rotate around the longitudinal axis thereof. The pair of helical guides is formed on the internal wall of the annular element and motor means are provided to angularly displace the annular element so as to servo-assist the insertion of the filter-holder into the water delivery group.

### Object and Summary of the Invention

The Applicant has found that known coffee machines of the type described above have a number of drawbacks that are well known to the operators in the sector.

In particular, the Applicant has found that one of these drawbacks is represented by the fact that the mechanical seal between the filter-holder and the water outlet of the water injection group is totally dependent on the effectiveness of the tight coupling of the coupling device, which is left exclusively to the action of the operator, i.e., the extent to which the operator is able to compress the filter-holder against the annular supporting body when rotating it from the insertion configuration to the tight coupling configuration.

As is well known, this operation requires not only a certain technique on the part of the operator, but above all a considerable effort, which can be extremely onerous from a physical point of view when it has to be repeated hundreds or even thousands of times a day, as in the case of a bartender, for example.

Moreover, the effort of tight coupling the filter-holder is not even the only one required to the operator, as the removal thereof also requires the operator to apply a not negligible force, at least in the first phase of the rotation in order to move the filter-holder away from the tight coupling configuration.

The Applicant has also found that another of the drawbacks of known coffee machines of the type described above is represented by the fact that the activation of the various operating functions of the coffee machines requires various interactions of the operator with different elements of the coffee machines.

The aim of the present invention is to provide improvements to remedy the above-described drawbacks.

According to the present invention, a coffee machine is provided, as claimed in the appended claims.

### Brief Description of the Drawings

Figure 1 shows, in perspective view and with parts removed for the sake of clarity, an embodiment of the coffee machine of the present invention.
Figure 2 shows, in exploded view, a detail of a water injection group of the coffee machine shown in Figure 1, and the filter-holder of the coffee machine in a disengagement configuration, in which filter-holder is disengaged from the water injection group.
Figure 3 shows the detail shown in Figure 2 in an assembled configuration, and the filter-holder in the aforementioned disengagement configuration.
Figure 4 shows, with parts removed for the sake of clarity, the coffee machine shown in Figure 1 during insertion of the filter-holder in the water injection group.
Figures 5 and 6 show the filter-holder engaged with the water injection group in an initial uncoupled configuration and in a final tight-coupled configuration of the filter-holder and the water injection group, respectively.
Figure 7 shows, in cross-section, the filter-holder and part of the water injection group arranged in the above-mentioned final tight-coupled configuration.
Figure 8 shows, in exploded view, a detail of the water injection group in a different embodiment of the coffee machine of the present invention and the filter-holder of the coffee machine in a disengagement configuration.
Figure 9 shows the detail shown in Figure 8 in an assembled configuration and the filter-holder in the above-mentioned disengagement configuration.
Figure 10 shows, with parts removed for the sake of clarity, the coffee machine shown in Figure 8 during insertion of the filter-holder on the water injection group.
Figures 11 and 12 show, in perspective view and, respectively, in a bottom view, the filter-holder shown in Figure 10 engaged with the water injection group in an initial uncoupled configuration.
Figures 13 and 14 show, in perspective view and, respectively, in bottom view, the filter-holder shown in Figure 10 engaged with the water injection group in a final tight-coupled configuration.
Figure 15 shows, in cross-section, the filter-holder and part of the water injection group arranged in the final tight-coupled configuration shown in Figure 14.
Figure 16 shows, in exploded view, a detail of the water injection group in a further different embodiment of the coffee machine of the present invention, and the filter-holder of the coffee machine in a disengagement configuration.
Figure 17 shows the detail shown in Figure 8 in an assembled configuration and the filter-holder in the above-mentioned disengagement configuration.
Figure 18 shows, with parts removed for the sake of clarity, the coffee machine shown in Figure 16 during insertion of the filter-holder on the water injection group;
Figures 19 and 20 show, in perspective view and, respectively, in bottom view, the filter-holder shown in Figure 18 engaged with the water injection group in an initial uncoupled configuration.
Figures 21 and 22 show, in perspective view and, respectively, in bottom view, the filter-holder shown in Figure 18 engaged with the water injection group in a final tight-coupled configuration.
Figure 23 shows, in cross-section, the filter-holder and part of the water injection group arranged in the final tight-coupled configuration shown in Figures 21 and 22.
Figure 24 shows, in perspective and with parts removed for the sake of clarity, a variant of the water injection group of the coffee machine of the present invention.
Figures 25, 26 and 27 show, in front view, three variants of a detail of the coffee machine of the present invention.

### Detailed description of preferred embodiments of the invention

The present invention will now be described in detail with reference to the accompanying drawings to enable a skilled person to realize and use it. Various modifications to the embodiments presented shall be immediately clear to persons skilled in the art and the general principles disclosed herein could be applied to other embodiments and applications but without thereby departing from the scope of protection of the present invention as defined in the appended claims. Therefore, the present invention should not be considered limited to the embodiments described and shown, but should be granted the widest protective scope in accordance with the features described and claimed.

Where not otherwise defined, all the technical and scientific terms used herein have the same meaning commonly used by persons of ordinary skill in the field pertaining to the present invention. In the event of a conflict, this description, including the definitions provided, shall be binding. Furthermore, the examples are provided for illustrative purposes only and as such should not be considered limiting.

In order to facilitate understanding of the embodiments described herein, reference will be made to some specific embodiments and a specific language will be used to describe them. The terminology used herein is for the purpose of describing only particular embodiments, and is not intended to limit the scope of the present invention.

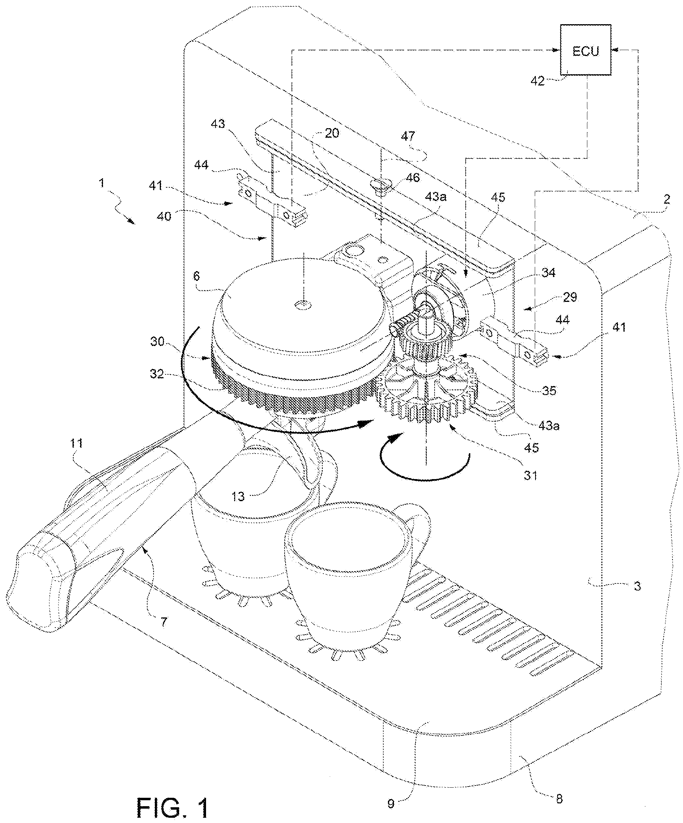

Figure 1 shows and denotes as a whole with the reference numeral 1 a semi-automatic coffee machine commonly for professional use in bars or for domestic use.

The coffee machine 1 comprises a box-shaped frame 2, which is delimited frontally, with respect to an operator, by a front wall 3, and a plurality of components for the production of coffee which are supported by the frame 2 and comprising a boiler 4 for the production of hot water arranged inside the frame 2.

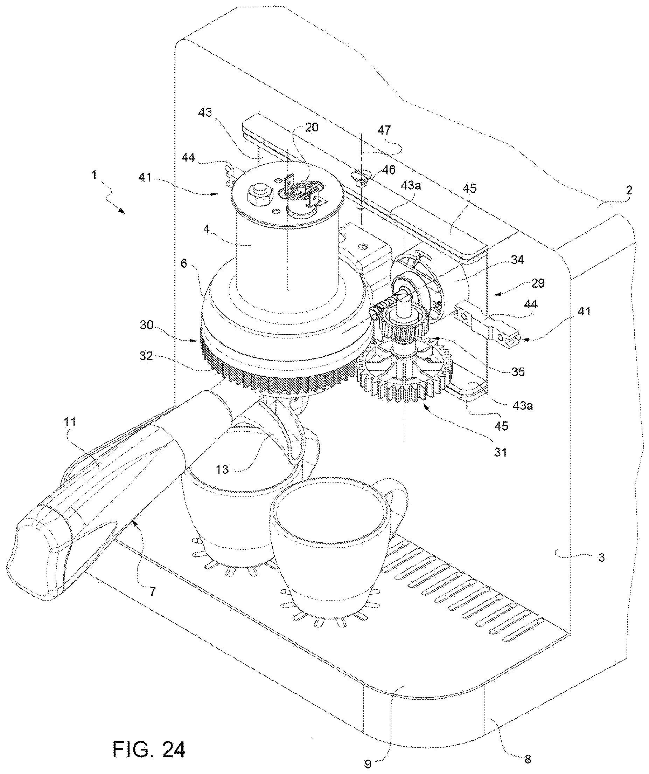

In a different embodiment, shown in Figure 24, the boiler 4 for the production of hot water is arranged outside the frame 2.

The front wall 3 can be either an external wall of the coffee machine 1 or an internal wall of the coffee machine 1 in turn protected by an external casing (not shown) which completely or partially covers the frame 2.

The boiler 4 comprises a hot water supply conduit 5, an end portion of which extends within a supporting body 6 mounted to protrude from the front wall 3 and configured to be releasably engaged by a filter-holder 7, which is designed to be filled with either loose ground coffee or a disposable coffee pod or capsule and to receive water from the supporting body 6.

From the lower end of the front wall 3, a drip tray 8 protrudes which is closed above by a grid 9 to support, in use, one or more cups underneath the filter holder 7.

The filter-holder 7 comprises a cup 10 open at the top and a handle 11 extending radially from the cup 10 and designed to be gripped by an operator to couple and uncouple the cup 10 to/from the supporting body 6.

The cup 10 is provided at the bottom with a conduit 12 for the delivery of the coffee beverage, to which a two-way delivery spout 13 can be connected, preferably removably, to allow the coffee beverage to be delivered in two cups at the same time.

The cup 10 houses internally a cup-shaped filter 14 which is designed to receive either loose ground coffee or a coffee pod or capsule. Preferably, the filter 14 is made of metallic material, conveniently stainless steel, and has a perforated bottom wall and a lateral wall ending with an edge 15 which is U-folded outwards and is arranged astride a free end edge of the cup 10.

The cup 10 has, close to its open end, a number of projections or fins 16, which radially project outwardly from the cup 10 and define a portion of a coupling device 17, of the type commonly referred to as a "bayonet", designed to removably couple the cup 10, and hence the filter-holder 7, to the supporting body 6. In the examples shown in the accompanying Figures, the fins 16 are in number of three and are mutually equispaced around a longitudinal axis of the cup 10. In variants not shown, the fins 16 could be in number of two or more than three.

The fins 16 lie substantially on a horizontal plane perpendicular to the longitudinal axis of the cup 10 and are delimited at the bottom by respective inclined planes 18, all of which have the same inclination and orientation relative to the lying plane of the fins 16.

As shown in the accompanying Figures, the supporting body 6 is generically cup-shaped, with a concavity facing downwards, and comprises a tubular lateral wall 19, coaxial to a substantially vertical axis 20, and a bottom wall, through which the aforementioned end portion of the hot water supply conduit 5 is formed.

A hot water distribution shower 21 is mounted at the centre of the bottom wall, fluidically communicates with the hot water supply conduit 5, and is surrounded by an annular cavity 22 coaxial to the axis 20 and housing a frontal seal 23 which, as will be described in more detail below, has the function of fluid-tight coupling the filter-holder 7 and the supporting body 6 when the coupling device 17 is tight-coupled.

Furthermore, a number of transverse projections 24 are associated with the supporting body 6, which are arranged on the supporting body 6 so as to cooperate with the fins 16 when the filter-holder 7 is coupled to the supporting body 6. The transverse projections 24 define, together with the fins 16, the aforementioned coupling device 17, of which they form a further portion.

For this purpose, the transverse projections 24 are delimited at the top, i.e., towards the bottom wall of the supporting body 6, by respective abutment planes 25, which are coplanar to each other and perpendicular to the axis 20 and are configured to slidably engage with the inclined planes 18 in response to a relative rotation of the transverse projections 24 and the fins 16, in the manner and forms described below, so as to cause an upward displacement of the filter-holder 7 and the compression of the latter against the supporting body 6, resulting in a tight coupling of the coupling device 17.

In particular, as will be further clarified in the following description, the coupling of the filter-holder 7 to the supporting body 6 comprises a first completely manual step during which the operator brings the cup 10 of the filter-holder 7 close to the supporting body 6 through a vertical upward movement in order to arrange the filter-holder 7 in an insertion configuration, in which the fins 16 are arranged in the free spaces between the transverse projections 24, and the edge 15 of the filter 14 engages the cavity 22 and faces the, and preferably contacts the, frontal seal 23.

Conveniently, in order to ease the correct positioning of the filter-holder 7 in the insertion configuration and to keep it stable in this configuration prior to tight coupling the coupling device 17, a magnetic positioning device 26 is there is provided, which comprises a number of permanent magnets 27, each fixed to a respective fin 16, and a number of permanent magnets 28 mounted along the periphery of the bottom wall of the cup 10 in positions such that, when the filter-holder 7 is approached to the supporting body 6, the permanent magnets 28 are facing corresponding permanent magnets 27 of the fins 16. Preferably, the attractive force between the pairs of facing permanent magnets 27 and 28 is enough to hold the filter-holder 7 in the insertion configuration, even if the operator completely abandons the filter-holder 7 before the coupling device 17 is tight-coupled.

The coupling of the filter-holder 7 to the supporting body 6 further comprises a second step during which the coupling device 17 is tight-coupled. In this step, the fins 16 and the projections 24 are relatively rotated and the engagement between the inclined planes 18 and the abutment planes 25 causes the filter-holder 7 to move from the insertion configuration to a tight coupling configuration, in which the filter-holder 7 is arranged at a higher level than in the insertion configuration and the edge 15 of the filter 14 is compressed against the frontal seal 23 so as to achieve a fluid-tight coupling with the latter.

The coffee machine 1 further comprises an automation device 29 configured to automatically tight-couple and uncouple the coupling device 17 so as to relieve the operator of the physical effort associated with such operations.

In this respect, it should be noted that, since the relative rotation of the fines 16 and the transverse projections 24 causes the coupling device 17 to be tight-coupled and uncoupled, there is no conceptual difference, but only an implementation difference, between a type of actuation of the coupling device 17, in the following for descriptive convenience indicated as the first type of actuation, in which the transverse projections 24 rotate relative to the fins 16, and a type of actuation of the coupling device 17, in the following for descriptive convenience indicated as the second type of actuation, in which the fines 16 rotate relative to the transverse projections 24.

The automation device 29 comprises a toothed ring nut 30 carried by the supporting body 6 and mounted to rotate around the axis 20, and a drive device 31 operatively coupled to the toothed ring nut 30 to rotate it around the axis 20 and move it between a rest configuration, in which an operator is allowed to couple the filter-holder 7 to the supporting body 6 in order to arrange it in the insertion configuration, and an operating configuration, in which the filter-holder 7 is in the tight coupling configuration.

Depending on the type of actuation of the coupling device 17, the toothed ring nut 30 rotates the transverse projections 24 relative to the fins 16, or, vice versa, the fins 16 relative to the transverse projections 24 to tight-couple and uncouple the coupling device 17.

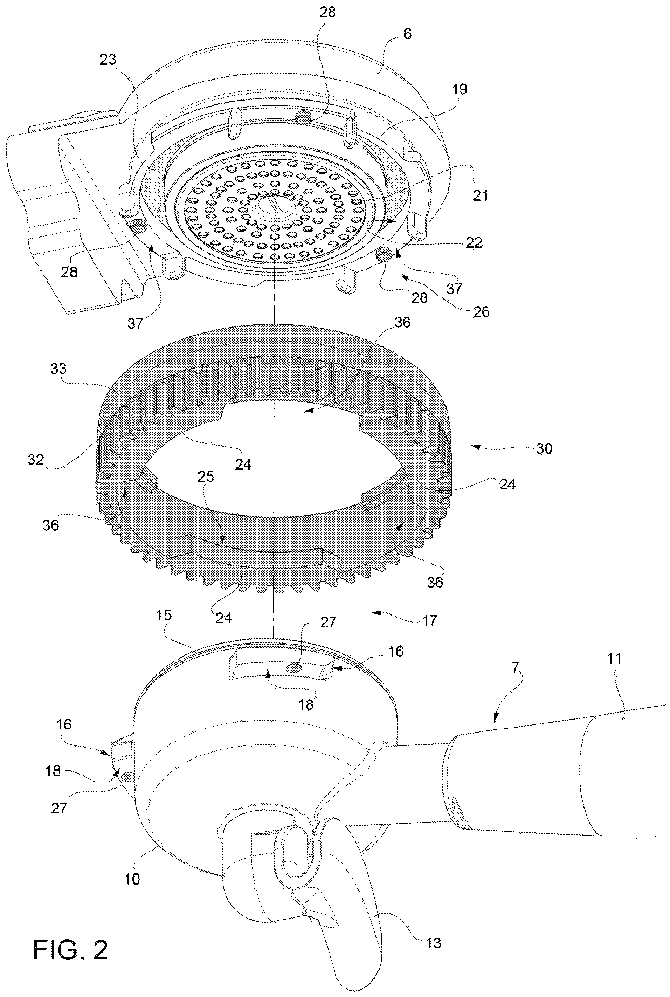

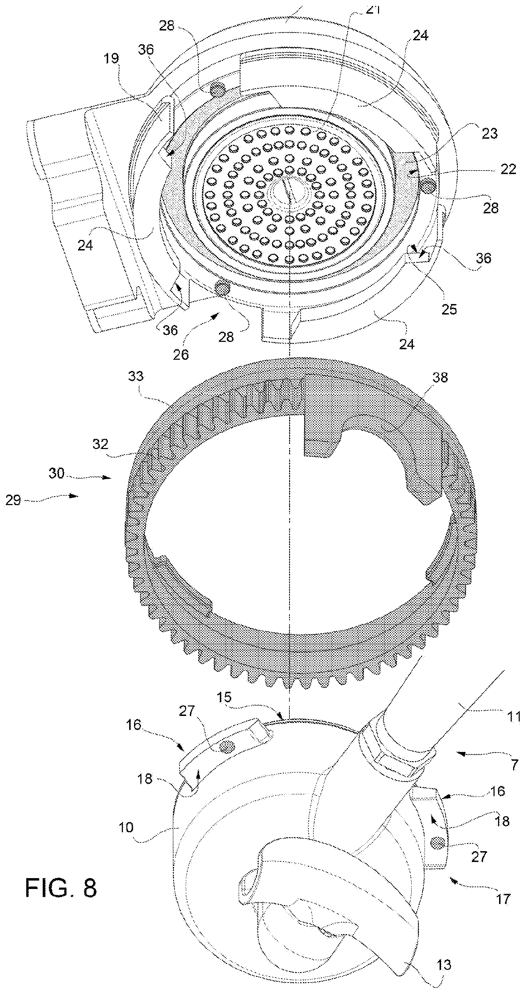

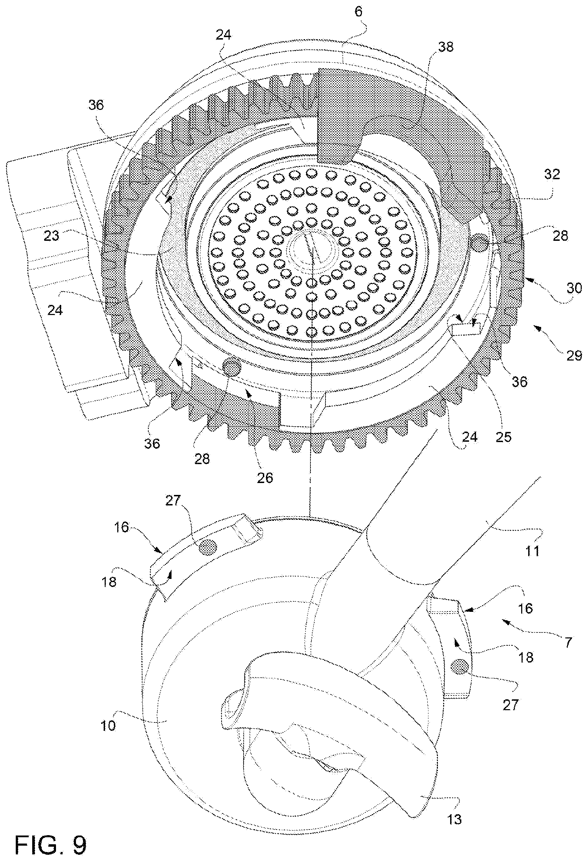

In particular, in the first type of actuation shown in Figures 2-7, the toothed ring nut 30 is mounted integral with the transverse projections 24 to rotate them relative to the fins 16, while in the second type of actuation (Figures 8-15 and 16-23), the toothed ring nut 30 is angularly coupled to the fins 16 to rotate them relative to the transverse projections 24.

The toothed ring nut 30 comprises an external toothing 32 coaxial to the axis 20 and formed on an annular body 33 rotatably mounted on the tubular side wall 19.

Preferably, the drive device 31 comprises an electric motor 34, arranged in the frame 2, and a gear transmission 35 designed to receive rotational motion from an output shaft of the electric motor 34 and transmit it, suitably reduced, to the ring nut 30. Preferably, the output shaft of the electric motor 34 extends through the front wall 3 and the gear transmission 35 is arranged outside the frame 2.

In an embodiment not shown, the drive device 31 comprises a gear motor entirely housed in the frame 2.

In the following, the automation device 29 will be described in more detail with explicit reference to each one of the two aforementioned types of actuation of the coupling device 17.

### FIRST TYPE OF ACTUATION OF THE COUPLING DEVICE

Figures 2 to 7 show an embodiment of the coffee machine 1 operating according to the first type of actuation of the coupling device 17, i.e., the type in which the transverse projections 24 rotate relative to the fins 16 and are rotated about the axis 20 by the toothed ring nut 30.

In this embodiment, the toothed ring nut 30, which is rotatably mounted on the tubular side wall 19, substantially forms an extension of the tubular lateral wall 19 and brings integrally the transverse projections 24 close to its own free end edge.

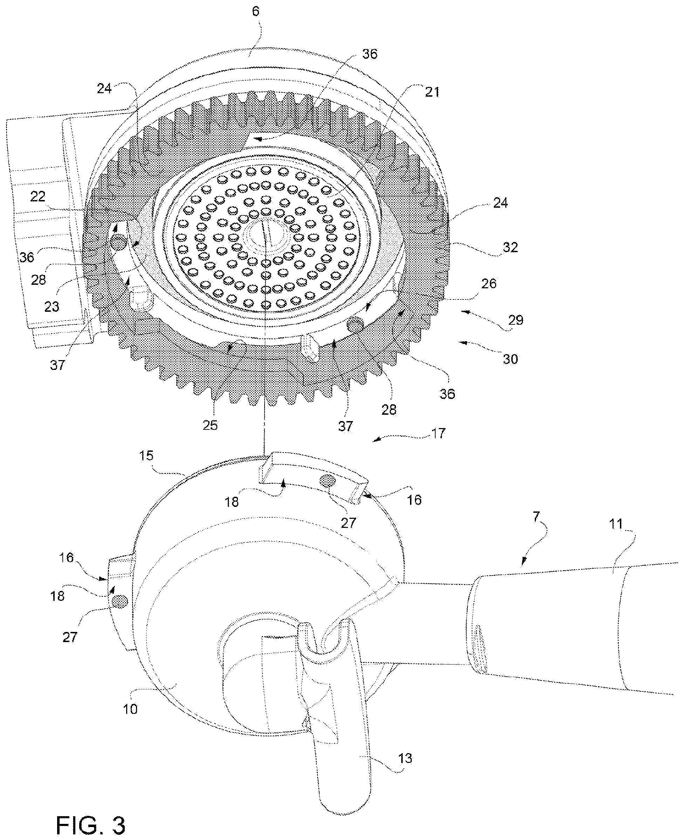

As shown in Figures 2 and 3, the transverse projections 24 extend from an inner surface of the toothed ring nut 30 towards the axis 20, are arranged with the respective abutment planes 25 facing the bottom wall of the supporting body 6, and are evenly distributed around the axis 20 such that free spaces 36 of sufficient angular width are circumferentially defined therebetween in order to allow the fines 16 to pass through the free spaces 36 in a direction parallel to the axis 20.

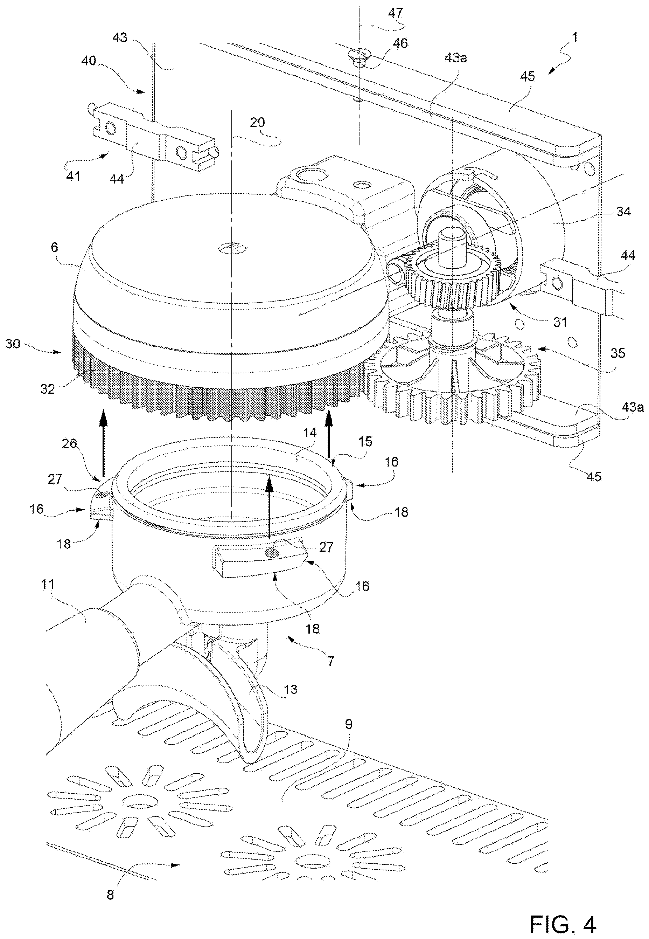

The supporting body 6 has a plurality of seats 37, which are distributed around the seal 23 so as to be axially aligned with corresponding free spaces 36 when the toothed ring nut 30 is in the rest configuration, and are so sized as to each accommodate a respective fin 16 when the filter-holder 7 is in the insertion configuration (Figure 4).

In order to attract the filter-holder 7 and then keep it stable in the insertion configuration, each seat 37 is provided with one of the aforementioned permanent magnets 28 of the positioning device 26 so as to cooperate, when the filter-holder 7 is approached to the supporting body 6, with the permanent magnet 27 of the corresponding fin 16.

Preferably, the seats 37 and, consequently, the toothed ring nut 30, are arranged around the axis 20 so that, when the filter-holder 7 is in the insertion configuration, the handle 11 of the filter-holder 7 is arranged frontally to the operator and generally perpendicular with respect to the front wall 3 of the casing 2. Since in the first type of actuation of the coupling device 17, the fins 16 of the filter-holder do not rotate during the tight coupling of the coupling device 17, but only undergo an axial upward displacement, the filter-holder 7 remains in the same frontal configuration relative to the operator even when it is in the tight coupling configuration.

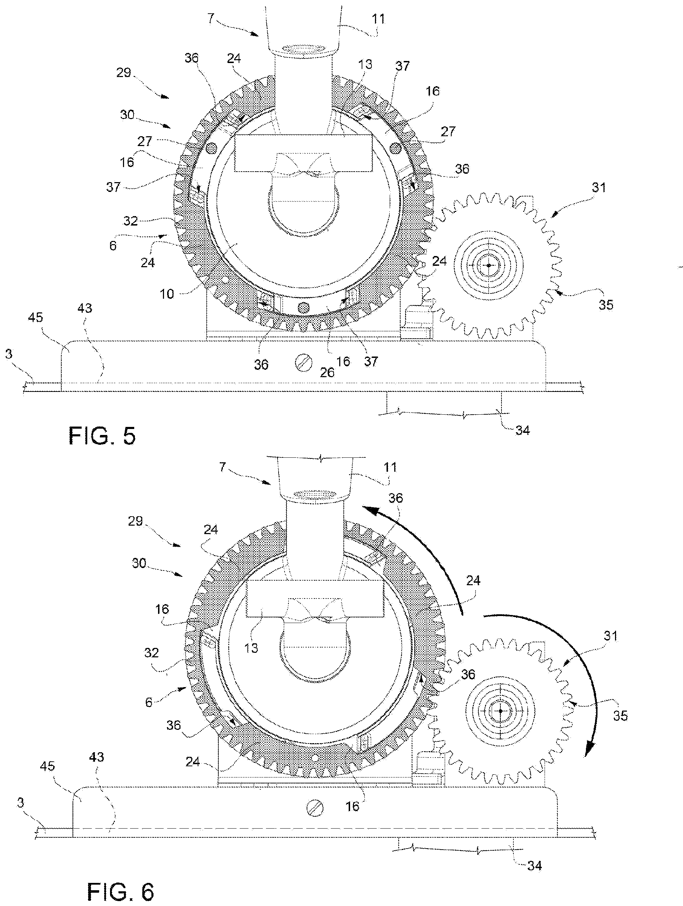

Figures 5 and 6 show how the coupling device 17 is tight-coupled by rotating the toothed ring nut 30 from the rest configuration, shown in Figure 5, to the operating configuration, shown in Figure 6.

In the rest configuration of the toothed ring nut 30, the filter-holder 7 is in the insertion configuration, in which the fins 16 engage the corresponding seats 37 and the edge 15 of the filter 14 engages the seal 23 frontally or is at least adjacent thereto.

As is clearly shown in Figure 6, in order to move the toothed ring nut 30 from the rest configuration to the operating configuration, the drive device 31 is operated to impart to the toothed ring nut 30 a rotation of such an extent as to cause the transverse projections 24 and the fins 16 to overlap, at least partially. During this rotation, the abutment planes 25 of the transverse projections 24 slide along the inclined planes 18 of the fins 16, imparting an upward thrust to the latter, and thus to the entire filter-holder 7.

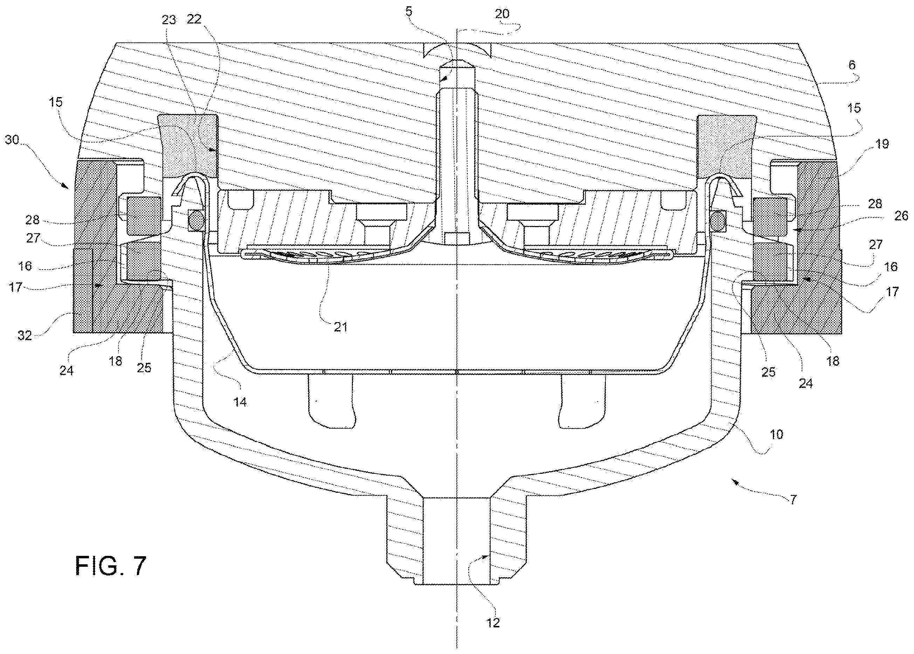

As shown in Figure 7, at the end of the rotation of the toothed ring nut 30, the filter-holder 7 is in the tight coupling configuration, in which the edge 15 of the filter 14 is compressed against the seal 23 so that the filter-holder 7 is fluid-tightly coupled to the supporting body 6.

### SECOND TYPE OF ACTUATION OF THE COUPLING DEVICE

Figures 8 to 15 and Figures 16 to 23 show respective embodiments of the coffee machine 1 operating according to the second type of actuation of the coupling device 17, i.e., the type in which the fins 16 rotate relative to the transverse projections 24 and the toothed ring nut 30 is angularly coupled to the fins 16 to rotate them about the axis 20.

In this embodiment, the transverse projections 24 are not carried by the toothed ring nut 30, but are integral with the tubular lateral wall 19. In particular, the transverse projections 24 are arranged along an end free edge of the tubular lateral wall 19, extend towards the axis 20, and the respective abutment planes 25 face the bottom wall of the supporting body 6.

Also in this embodiment, the transverse projections 24 are evenly distributed around the axis 20 and circumferentially define therebetween free spaces 36 of sufficient angular width to allow the fins 16 to pass through the free spaces 36 in a direction parallel to the axis 20.

In the sections corresponding to the free spaces 36, around the seal 23, the bottom wall of the supporting body 6 carries the permanent magnets 28 which, like in the previous embodiment, are designed to cooperate, when the filter-holder 7 is approached to the supporting body 6, with the permanent magnets 27 carried by the corresponding fins 16 in order to attract and retain, or help to retain, the filter-holder 7 in the insertion configuration.

As mentioned above, in the second type of actuation of the coupling device 17, the toothed ring nut 30 is angularly coupleable to the fins 16 and, hence, to the filter-holder 7, such that the filter-holder 7 is rotated around the axis 20 when it is actuated by the drive device 31.

The angular coupling between toothed ring nut 30 and filter-holder 7 is achieved when filter-holder 7 assumes the insertion configuration. Two examples of how this angular coupling can be achieved are given by the embodiments shown in Figures 8 to 15 and Figures 16 to 23, respectively.

In the embodiment shown in Figures 8 to 15, the toothed ring nut 30 is provided with a fork 38 configured to be arranged astride the handle 11 of the filter-holder 7 when the latter is in the insertion configuration, thereby making the filter-holder 7 and the toothed ring nut 30 angularly integral.

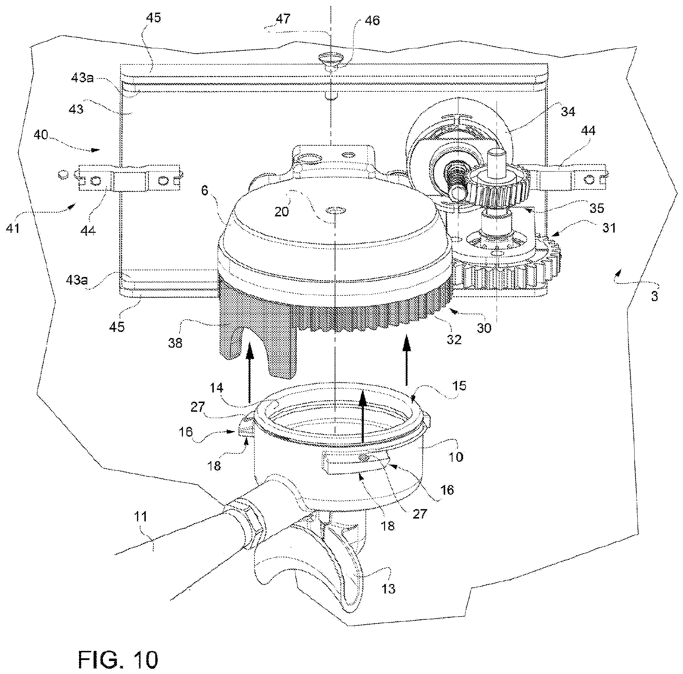

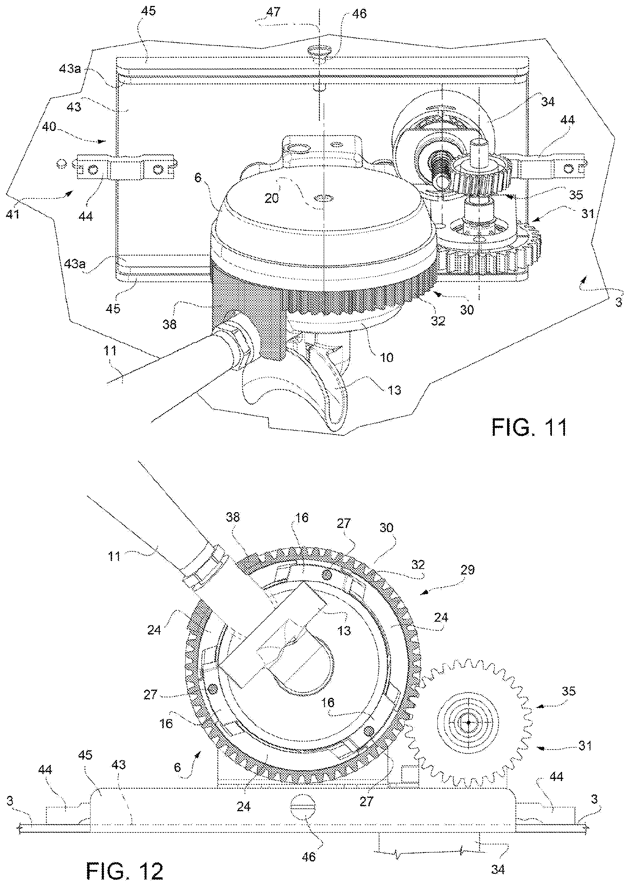

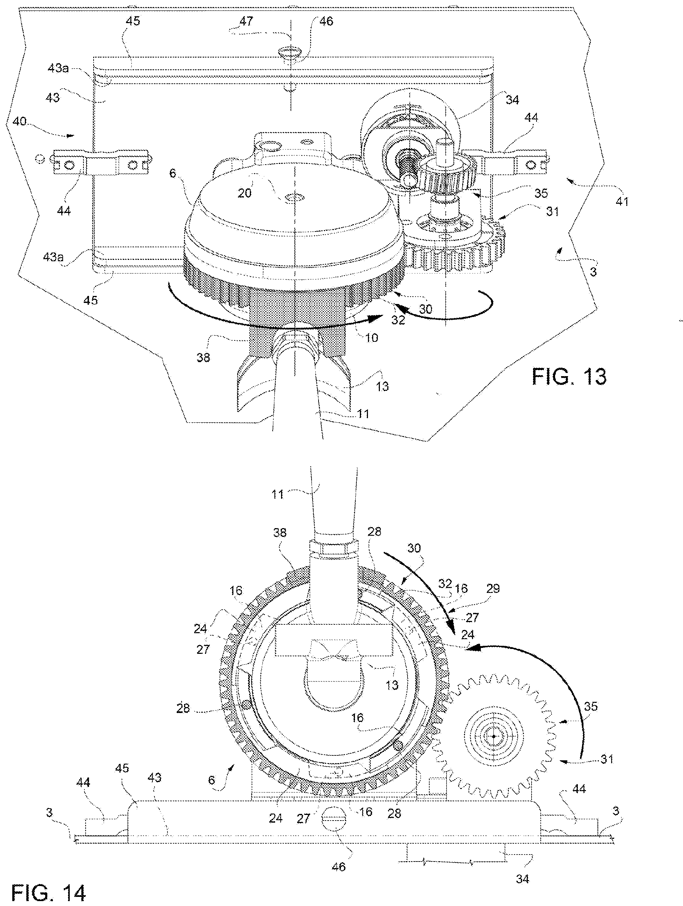

As shown in Figures 10, 11 and 13, conveniently, the toothed ring nut 30 is mounted on the supporting body 6 so that, when the toothed ring nut 30 is in the rest configuration, the fork 38 is angularly offset from a central configuration facing the operator and, preferably, is to the left of the operator (Figures 10 and 11). Preferably, moreover, the rest configuration of the toothed ring nut 30 is chosen so that, after the rotation of the toothed ring nut 30 from the rest configuration to the operating configuration, the fork 38 and, hence, the handle 11 of the filter-holder 7, is substantially in said central configuration in front of the operator (Figure 13).

Figures 12 and 14 show how the coupling device 17 is tight coupled by rotating the toothed ring nut 30 from the rest configuration (Figure 12) to the operating configuration (Figure 14), and the corresponding rotation of the filter-holder 7 from the insertion configuration (Figure 12) to the tight coupling configuration (Figure 14).

In the insertion configuration of the filter-holder 7, the handle 11 is inserted into the fork 38, the fins 16 are arranged between the transverse projections 24 in corresponding free spaces 36, and the edge 15 of the filter 14 engages the seal 23 frontally or is at least adjacent thereto.

Operation of the drive device 31 causes the toothed ring nut 30 to rotate, dragging the filter-holder 7 with it and sliding the fins 16 on the transverse projections 24, thus moving the filter-holder 7 upwards.

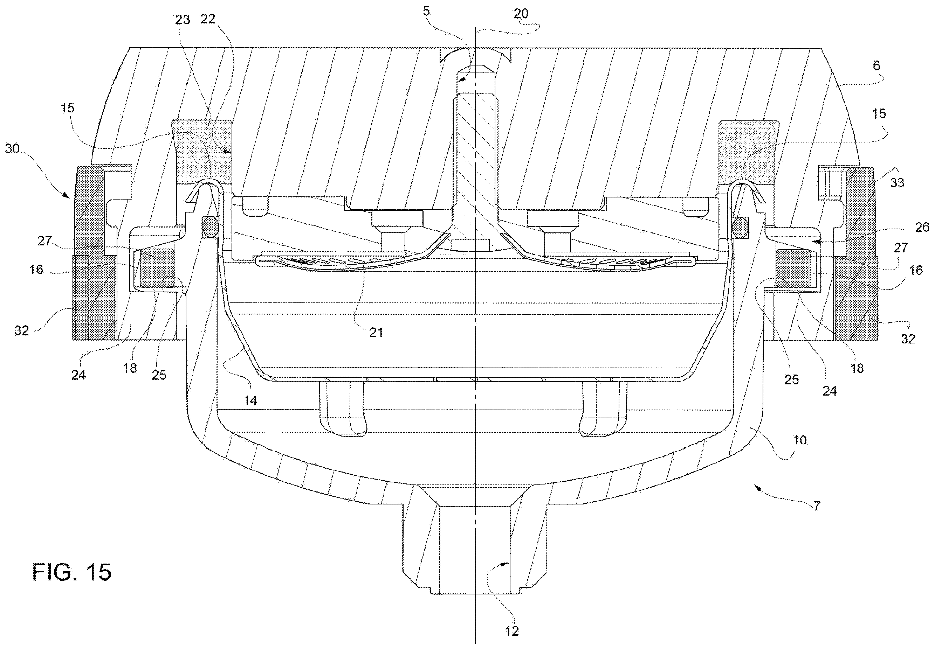

As shown in Figure 15, at the end of the rotation of the toothed ring nut 30 and the filter-holder 7, the latter is in the tight coupling configuration, in which the edge 15 of the filter 14 is compressed against the seal 23, so that the filter-holder 7 is fluid-tightly coupled to the supporting body 6.

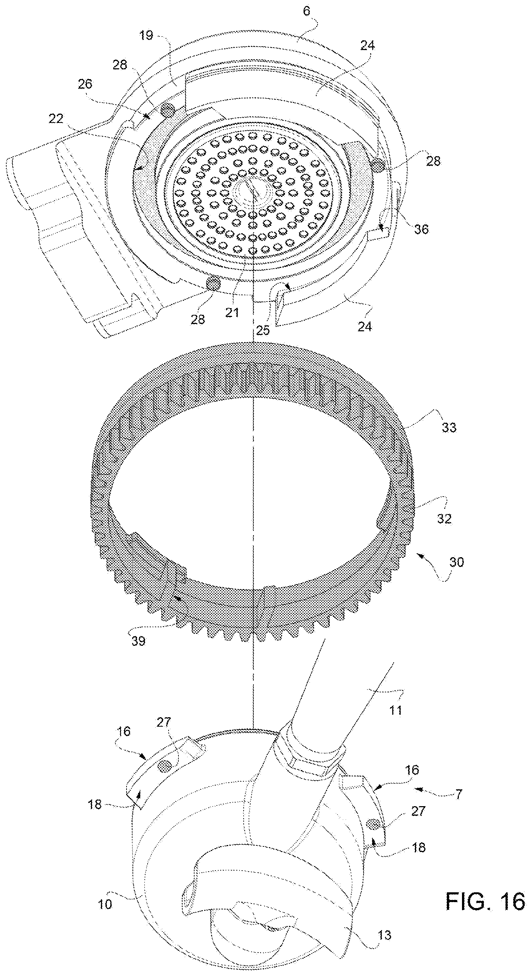

In the embodiment of Figures 16 to 23, the angular coupling between the toothed ring nut 30 and the filter-holder 7 is achieved by means of a seat or pocket 39 integral with the toothed ring nut 30 and configured to be engaged by one of the fins 16 of the filter-holder 7 when the toothed ring nut 30 is in the rest configuration and the filter-holder 7 is brought in the insertion configuration.

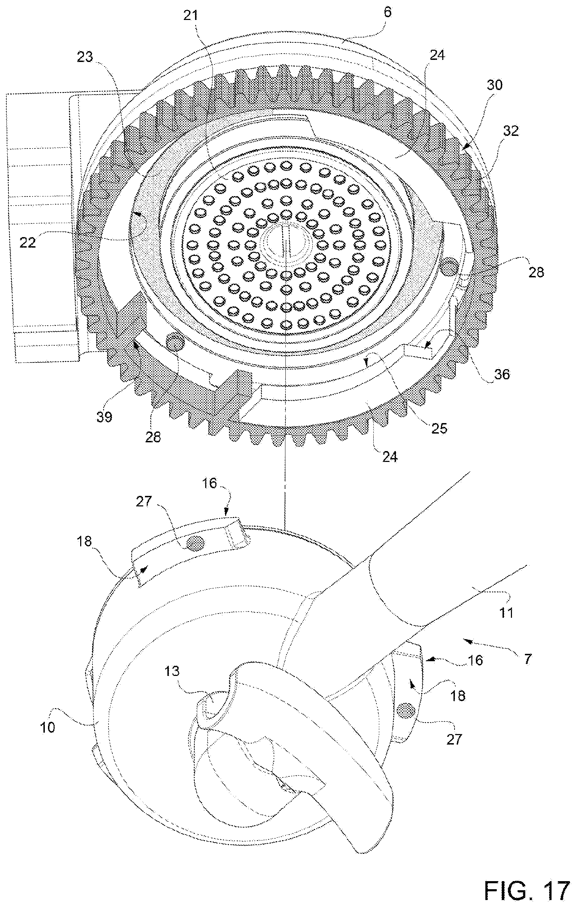

In particular, as shown in Figure 17, the pocket 39 is defined by two walls projecting from an inner surface of the toothed ring 30, extends within one of the free spaces 36 between the transverse projections 24 and is so sized as to contain a fin 16 with relative precision.

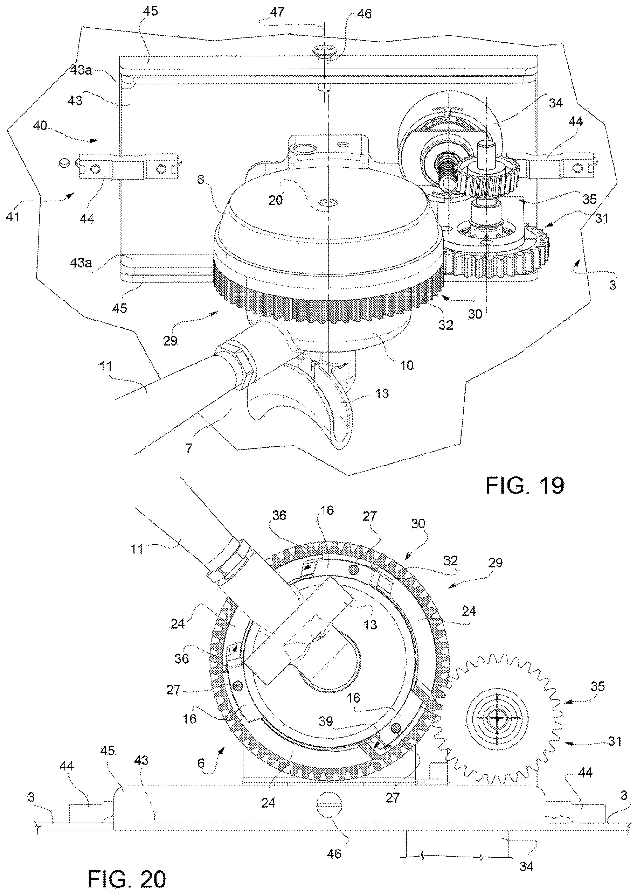

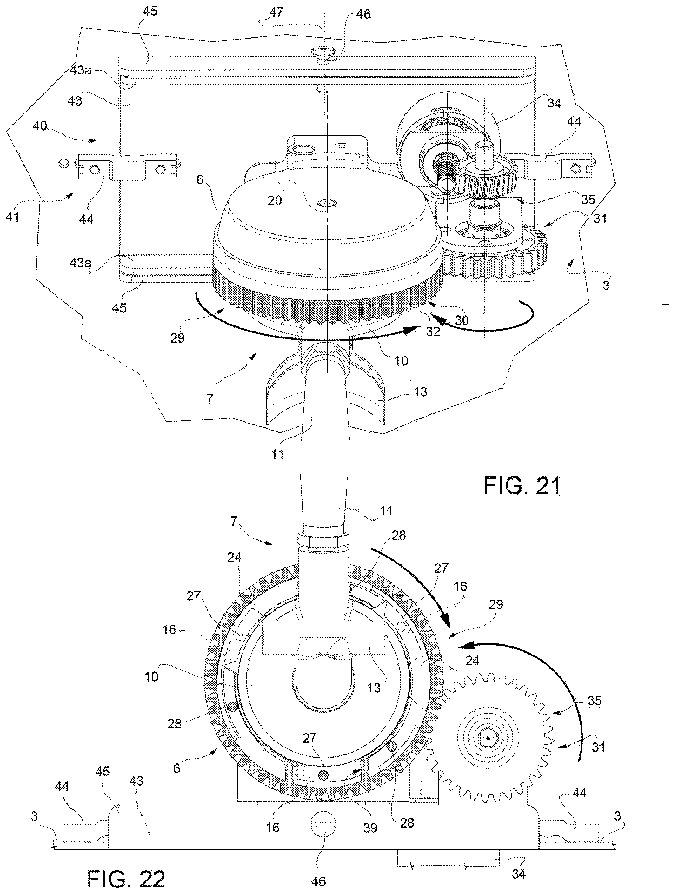

When the toothed ring nut 30 is in the rest configuration and the filter-holder 7 is inserted in the supporting body 6, one of the fins 16 is inserted in the pocket 39 (Figure 20) so as to constrain the filter-holder 7 to rotate together with the toothed ring nut 30 when the latter moves into the operating configuration. The rotation of the filter-holder 7 causes the fins 16 to engage the respective transverse projections 24, so resulting in the tight coupling of the coupling device 17 (Figure 22). In this regard, it is noted that in the shown example, the size of the pocket 39 is such that, during rotation of the filter-holder 7, the pocket 39 would interfere with the transverse projection 24 intended to cooperate with the fin 16 inserted in the pocket 39. Therefore, said transverse projection 24 is absent and the tight coupling of the coupling device 17 is effectively achieved by engaging the other fins with the respective transverse projections 24. In a variant not shown, the pocket 39 is so sized and shaped as to allow it to be rotated despite the presence of the transverse projection 24 intended to cooperate with the fin 16 inserted in the pocket 39.

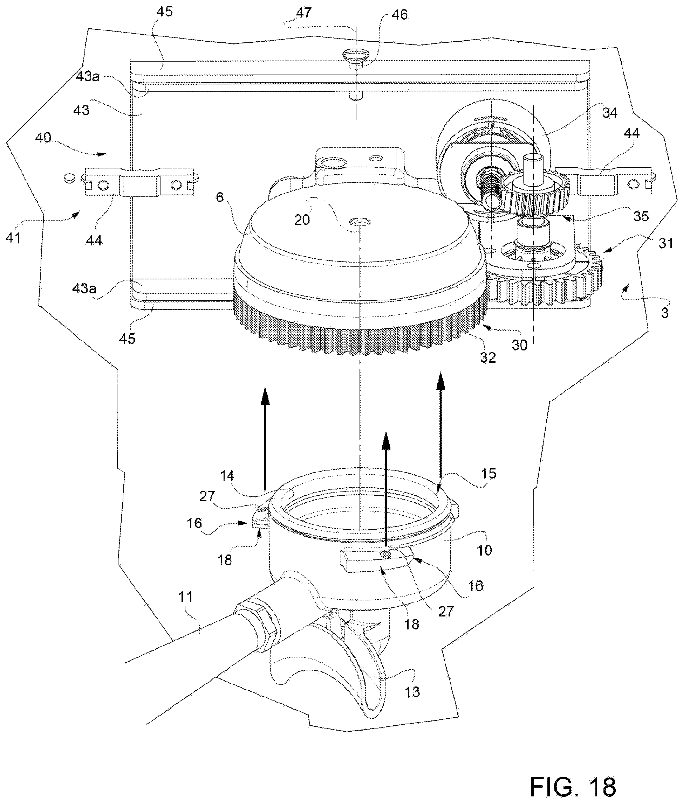

As shown in Figures 18, 19 and 21, the toothed ring nut 30 is conveniently mounted on the supporting body 6 so that, when the toothed ring nut 30 is in the rest configuration, it is possible to insert a fin 16 into the pocket 39 while keeping the handle 11 of the filter-holder 7 in a configuration angularly offset leftwards relative to a central configuration in front of the operator so that, after the rotation of the toothed ring nut 30 from the rest configuration to the operating configuration, the handle 11 is substantially in said central configuration in front of the operator.

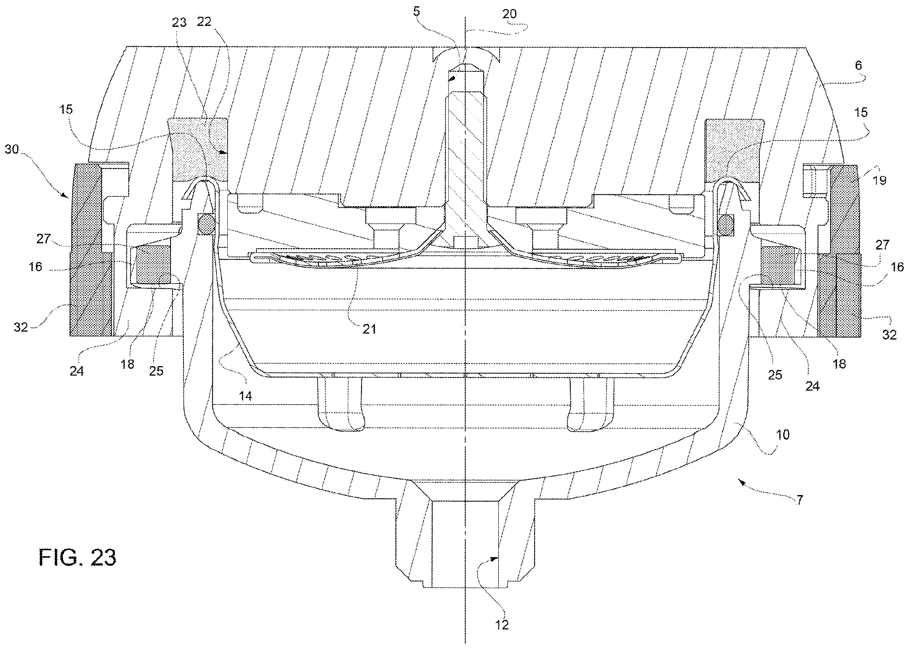

As shown in Figure 23, at the end of the rotation of the toothed ring nut 30 and the filter-holder 7, the latter is in the tight coupling configuration, in which the edge 15 of the filter 14 is compressed against the seal 23, so that the filter-holder 7 is fluid-tightly coupled to the supporting body 6.

Regardless of whether the coupling device 17 belongs to the first type or second type of actuation described above, the automation device 29 of the coffee machine 1 is configured, as mentioned above, to automatically tight-couple and uncouple the coupling device 17 so as to replace, or assist, the operator in performing such actions.

In order to implement such an automatism, which from a practical point of view requires the activation of the drive device 31 which rotates the toothed ring nut 30, the automation device 29 comprises a user interface 40 operatively coupled to the drive device 31 and configured to allow an operator to cause the toothed ring nut 30 to rotate in both directions of rotation in order to tight-couple and uncouple the coupling device 17.

In a basic embodiment not shown in the accompanying Figures, the user interface 40 may comprise a simple button or rocker switch with two or more positions, or one or more touch keys, or a touch-sensitive panel capable of detecting simple touches or more complex gestures made by an operator.

In a advanced embodiment shown in the accompanying Figures, according to a different and independent aspect of the invention, the user interface 40 is configured to transform actions performed manually by an operator on the filter-holder 7 into corresponding electrical commands for the drive device 31, such that the toothed ring nut 30 is rotated in opposite directions of rotation and for a given time.

In particular, the user interface 40 comprises:
- an electronic sensory system 41 configured to sense actions by an operator on the handle 11 of the filter-holder 7 and output an electrical output indicative of the actions by an operator on the handle 11 of the filter-holder 7, and
- an electronic control unit 42 communicatively coupled with, in particular electrically connected to, the electronic sensory system 41 and the drive device 31 to receive the electrical output of the electronic sensory system 41 and to generate corresponding electrical commands for the drive device 31 based on the received electrical output, so as to cause the toothed ring nut 30 to rotate in opposite directions of rotation to tight-couple and uncouple the coupling device 17 in response to actions made by an operator on the filter-holder 7.

As shown in Figure 1, the electronic sensory system 41 comprises a panel or plate 43, which is mounted on the front wall 3 and supports the supporting body 6, and one or more sensors 44 coupled to the plate 43 to sense forces applied to the plate 43 directly or indirectly through the filter-holder 7.

Conveniently, motion sensors 44 coupled to the plate 43 may be used as sensors 44 so as to sense (micro-)movements of the plate 43 caused by actions of an operator on the plate 43 either directly or indirectly, through the filter-holder 7.

The number, the technology and the arrangement of the motion sensors 44 are chosen such that they allow to sense (micro-)movements of the plate 43 caused by actions that are wished to be sensed of an operator on the plate 43 either directly or indirectly, through the filter-holder 7.

Conveniently, load cells 44 can be used as motion sensors 44, which are explicitly referred to in this description without losing generality.

Furthermore, since, by convention, the filter-holder of a coffee machine is rotated by an operator counterclockwise (rightwards with respect to the operator) to be locked on the supporting body and clockwise (leftwards with respect to the operator) to be unlocked, conveniently, the number, technology and the arrangement of the motion sensors are chosen such that they allow sensing (micro-)movements of the plate 43 caused by the force applied by the operator to the filter-holder 7 in order to rotate the latter anticlockwise and clockwise.

In this embodiment, the electronic control unit 42 is programmed to:
- determine, based on the electrical outputs of the load cells 44, the movements of the plate 43 caused by the actions manually performed by an operator on the handle 11 of the filter-holder 7, and
- generate electrical commands for the drive device 31 such that the latter causes the toothed ring 30 to rotate from the rest configuration to the operating configuration when the load cells 44 sense a movement of the plate 43 caused by a rightward (counterclockwise) thrust applied to the filter-holder 7 by the operator, and, conversely, from the operating configuration to the rest configuration when the load cells 44 sense a movement of the plate 43 caused by a leftward (clockwise) thrust applied to the filter-holder 7 by the operator.

In the embodiment shown in the accompanying Figures, the plate 43 has a rectangular shape and is delimited by a substantially horizontal lower and upper edges, and by two substantially vertical lateral edges. The lower and upper edges have respective extensions 43a projecting perpendicularly from the plate 43 outwards from the front wall 3 and arranged facing and contiguous with respective brackets 45 projecting from the lower and upper sides of a window in the front wall 3 in which the plate 43 is inserted.

Preferably, each extension 43a is connected to the respective bracket 45 by means of a pin 46 arranged substantially in the centre of the bracket 45 and coaxial to the other pin 46 so as to define, with the latter, a vertical rotation axis 47, about which the plate 43 may oscillate, in opposite directions, when the operator imparts a rightward or leftward thrust to the supporting group 6 through the filter-holder 7.

In order to sense the movement, i.e., the oscillation, of the plate 43, the load cells 44 are arranged between the plate 43 and the front wall 3 at the lateral edges of the plate 43, on the outside of the front wall 3.

In any case, the embodiment shown in Figures 1-23 is only an example of how many load cells 44 may be required and how they should be arranged with respect to the plate 43 and the front wall 3 in order to sense movements of the plate 43 in response to the rightward and leftward thrust imparted by an operator to the filter-holder 7 inserted in the supporting body 6. The number, the configuration and the orientation of the load cells 44 depends in fact on the type of load cell used.

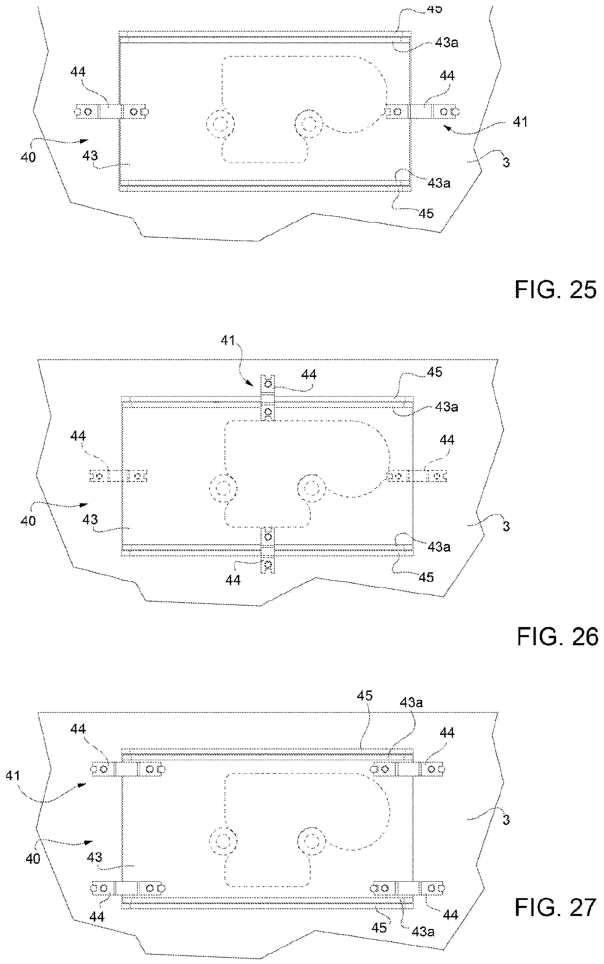

Furthermore, as shown in Figure 25, the presence of the pin 46 is also optional since the number and the arrangement of the load cells 44 may be sufficient to give the plate 43 and the movements thereof sufficient stability.

Finally, also the shape of the plate 43 shown in the accompanying Figures is purely for illustrative purposes and may be replaced by a mounting element of any shape and size as long as it is suitable to rigidly support the supporting body 6 and to allow the load cells 44 to be applied for sensing (micro-)movements of the plate 43 in response to a rightward and leftward thrust imparted by an operator to the filter-holder 7 inserted in the supporting body 6.

Depending on whether the coupling device 17 operates according to the first type or the second type of actuation, the tight coupling thereof, which, as mentioned above, is caused by the rotation of the toothed ring nut 30, takes place either in a fully automatic mode, in which the rotation of the toothed ring nut 30 is exclusively controlled by the electronic control unit 42 through the drive device 31, or, respectively, in a partially automatic mode, in which the rotation of the toothed ring nut 30 is carried out partly manually by the operator and partly automatically by the drive device 31.

In fact, in the first type of actuation, in which the filter-holder 7 is not rotated between the insertion configuration and the tight coupling configuration and the transverse projections 24 are carried by the toothed ring nut 30 to move relative to the fins 16, the tight coupling of the coupling device 17 occurs in a completely automatic manner when an operator places the filter-holder 7 in the insertion configuration and imparts a rightward thrust (if the convention is followed, or leftwards) as if he wanted to rotate it to lock it, thus causing a movement (oscillation) of the plate 43, corresponding electrical outputs of the load cells 44 and operation of the drive device 31, consequently the rotation of the toothed ring nut 30 in the operating configuration, in response to an electrical command from the electronic control unit 42.

Conversely, a thrust in the opposite direction, in this case to the left, imparted by the operator to the filter-holder 7 as if he wanted to unlock it to remove it, causes an opposite movement of the plate 43 and consequently the rotation of the toothed ring nut 30 from the operating configuration to the rest configuration.

On the other hand, in the second type of actuation, in which the filter-holder 7 is integral with the toothed ring nut 30 when the filter-holder 7 is in the insertion configuration and is rotated to move between the insertion configuration and the tight coupling configuration so as to cause the fins 16 to engage to, or disengage from, the transverse projections 24, the tight coupling of the coupling device 17 takes place in a partially automatic manner, that is, it occurs in a manual "servo-assisted" manner.

In particular, when the operator places the filter-holder 7 in the insertion configuration and imparts a rightward thrust (if the convention is followed, or leftwards), the filter-holder 7 actually starts rotating towards the tight coupling configuration but, at the same time, the load cells 44 senses a consequent thrust on the plate 43 and, consequently, the electronic control unit 42 activates the drive device 31 which rotates the toothed ring nut 30 into the operating configuration, thus completing the tight coupling of the coupling device 17 without the operator having to exert any more force on the filter-holder 7.

The uncoupling of the coupling device 17 is mainly automatic as the thrust imparted by the operator to the filter-holder 7 in the opposite direction, in this case to the left, does not have to be of such an extent as to overcome the tight coupling force, but it is sufficient that it is suitable for being sensed by the load cells 44 through the movement of the plate 43 so as to cause the rotation of the toothed ring nut 30 from the operating configuration to the rest configuration and, hene, the return of the filter-holder 7 to the insertion configuration.

It goes without saying that the tight coupling and uncoupling of the coupling device 17 may be achieved by acting directly on the plate 43, in particular by imparting thrusts directly on the plate 43, on opposite sides of the supporting body 6.

Finally, in a preferred embodiment, the automation device 29 is configured to control not only the tight coupling and uncoupling of the coupling device 17, but also to start and stop beverage delivery in response to appropriate actions manually performed by the operator on the handle 11 of the filter-holder 7.

Preferably, the delivery of the beverage is controlled similarly to that described above for the tight coupling of the coupling device 17 and, in particular, is carried out by means of load cells 44 which are mounted between the plate 43 and the front wall 3 to sense a movement of the plate 43 in directions that are different from the movements caused by the thrusts imparted to the filter-holder 7 to and from the tight coupling configuration.

The load cells 44 provided for this purpose may be the same as those intended to sense the movements of the plate 43 when tight coupling and uncoupling the coupling device 17, or may be distinct from those intended to sense the movements of the plate 43 when tight coupling and uncoupling the coupling device 17 and arranged in appropriate positions with respect to the plate 34. For the sake of simplicity, in the accompanying Figures all load cells 44 are shown with the same reference number, regardless of the type of movement they are intended to sense.

In a preferred embodiment, the command to start and stop the beverage delivery is imparted by the operator by exerting on the handle 11 of the filter-holder 7, when the latter is arranged in the tight coupling configuration, an upward and, respectively, a downward thrust. Since the filter-holder 7 is integrally coupled to the supporting body 6, the thrust imparted to the filter-holder 7 is transmitted to the plate 43 and is sensed by the load cells 44, whose electrical outputs cause the electronic control unit 42 to control the start or stop of a pump (not shown) that supplies water to the boiler 4.

In a different embodiment, the command to start and stop the beverage delivery may be given by the operator by applying to the handle 11 of the filter-holder 7, when the latter is arranged in the tight coupling configuration, a torque tending to rotate the handle rightwards and, respectively, leftwards.

Figures 25, 26 and 27 show examples of possible arrangements of the load cells 44 in order to sense the movements of the plate 43 caused by a thrust on the filter-holder 7 rightwards/leftwards and/or upwards/downwards.

In particular, Figure 25 shows a situation in which the thrusts on the filter-holder 7 rightwards/leftwards and/or upwards/downwards are sensed by the same pair of load cells 44 arranged at the smaller sides of the plate 43.

Figure 26 shows both the situation in which the thrusts on the filter-holder 7 rightwards/leftwards and/or upwards/downwards are sensed by the same pair of load cells 44 (shown in a continuous line) arranged at the larger sides of the plate 43, and the situation in which the thrusts on the filter-holder 7 rightwards/leftwards are sensed by a first pair of load cells 44 (shown in a dashed line) arranged at the smaller sides of the plate 43, while the thrusts on the filter-holder 7 upwards/downwards are sensed by a second pair of load cells 44 (shown in a continuous line) arranged at the larger sides of the plate 43.

In the end, Figure 27 shows the situation in which the thrusts on the filter-holder 7 rightwards/leftwards and/or upwards/downwards are sensed by four load cells 44 arranged near the four vertices of the plate 43.

Similarly to what has been said for the tight coupling and uncoupling of the coupling device 17, in a basic embodiment, also for the command to start and stop the beverage delivery the user interface 40 may comprise a simple button or a rocker switch with two or more positions, or a pair of touch keys, or even a touch-sensitive panel capable of sensing simple touches or a more complex gesture made by the operator.

It follows from the foregoing that the user interface 40 according to the advanced embodiment may be of a type capable of controlling both the tight coupling/uncoupling of the coupling device 17 and the start/stop of beverage delivery in response to actions made by an operator on the filter-holder 7, or of a type capable of controlling only one of the tight coupling/uncoupling of the coupling device 17 and the start/stop of beverage delivery.

## Claims

1. A coffee machine (1) comprising:
a supporting body (6) designed to deliver hot water for producing a beverage;
a filter-holder (7) designed to be fillable with a brewing material and to be releasably coupleable to the supporting body (6) to receive hot water therefrom for brewing the brewing material and producing a beverage;
a coupling device (17) comprising a first coupling part (24) mounted on the supporting body (6) and a second coupling part (16) carried by the filter-holder (7); the coupling device (17) is configured to cause the filter-holder (7) to assume a tight-coupling configuration, in which the filter-holder (7) is tight-coupled to the supporting body (6), starting from an insertion configuration, in which the filter-holder (7) is loosely inserted to the supporting body (6), as a result of a relative rotation of the first coupling part (24) and the second coupling part (16); and
an automation device (29) configured to cause the first coupling part (24) and the second coupling part (16) to relatively rotate at least partially automatically; the automation device (29) comprises a motorised member (30) operable to relatively rotate the first coupling part (24) and the second coupling part (16) about an axis (20) of the supporting body (6) and in opposite rotation directions;
**characterised in that** the first coupling part (24) is integral with the supporting body (6) and the motorised member (30) comprises a ring nut (30), which is rotatably mounted on the supporting body (6) to rotate about the axis (20) and is designed to be coupleable to the filter-holder (7), when the filter-holder (7) is in the insertion configuration, so as to become angularly integral with the filter-holder (7);
and **in that** the ring nut (30) is operable to rotate the second coupling part (16) relative to the first coupling part (24) so as to move the filter-holder (7) from the insertion configuration to the tight-coupling configuration, and vice versa.

2. The coffee machine (1) of claim **1,** wherein the ring nut (30) comprises a seat (38; 39) configured to be engageable, when the filter-holder (7) is in the insertion configuration, by a part of the filter-holder (7) so as to cause the filter-holder (7) and the ring nut (30) to become angularly integral.

3. The coffee machine (1) of claim **2,** wherein the seat (38) is defined by a fork (38) integral with the ring nut (30) and is configured to be arrangeable astride a handle (11) of the filter-holder (7), when the filter-holder (7) is in the insertion configuration, so as to cause the filter-holder (7) and the ring nut (30) to become angularly integral.

4. The coffee machine (1) of claim **2,** wherein the seat (39) is defined by a pocket (39) integral with the ring nut (30) and is configured to be engageable by the second coupling part (16) of the filter-holder (7) when the filter-holder (7) is in the insertion configuration so as to cause the filter-holder (7) and the ring nut (30) to become angularly integral.

5. A coffee machine (1) comprising:
a supporting body (6) designed to deliver hot water for producing a beverage;
a filter-holder (7) designed to be fillable with a brewing material and to be releasably coupleable to the supporting body (6) to receive hot water therefrom for brewing the brewing material and producing a beverage;
a coupling device (17) comprising a first coupling part (24) mounted on the supporting body (6) and a second coupling part (16) carried by the filter-holder (7); the coupling device (17) is configured to cause the filter-holder (7) to assume a tight-coupling configuration, in which the filter-holder (7) is tight-coupled to the supporting body (6), starting from an insertion configuration, in which the filter-holder (7) is inserted loosely in the supporting body (6), as a result of a relative rotation of the first coupling part (24) and the second coupling part (16); and
an automation device (29) configured to cause the first coupling part (24) and the second coupling part (16) to relatively rotate at least partially automatically; the automation device (29) comprises a motorised member (30) operable to relatively rotate the first coupling part (24) and the second coupling part (16) about an axis (20) of the supporting body (6) and in opposite rotation directions; **characterized in that**
the motorised member (30) comprises a ring nut (30), which is rotatably mounted on the supporting body (6) to rotate about the axis (20) and carries the first coupling part (24);
the ring nut (30) is operable to rotate the first coupling part (24) relative to the second coupling part (16) to cause the filter-holder (7) to assume the tight-coupling configuration completely automatically starting from the insertion configuration, and vice versa;
the ring nut (30) is angularly oriented around the axis (20) so as to allow the filter-holder (7) to be manually arrangeable in the insertion configuration by an upward movement of the filter-holder (7) exclusively along the axis (20) towards the supporting body (6).

6. The coffee machine (1) of claim **5,** wherein the supporting body (6) is so shaped as to cooperate with the second coupling part (16) when the filter-holder (7) is in the insertion configuration so as to substantially prevent the filter-holder (7) from rotating about the axis (20) during rotation of the ring nut (30), so as to assume one and the same configuration relative to an operator both in the insertion configuration and in the tight coupling configuration.

7. The coffee machine (1) of claim **5** or **6,** wherein the ring nut (30) is angularly oriented around the axis (20) so that both in the insertion configuration and in the tight-coupling configuration the filter-holder (7) assumes, relative to an operator, a frontal configuration, in which a handle (11) of the filter-holder (7) is arranged frontally relative to the operator.

8. The coffee machine (1) of any one of the preceding claims, further comprising a magnetic positioning device (26) designed to ease positioning of the filter-holder (7) in the insertion configuration when it is approached to the supporting body (6);
the positioning device (26) comprises one or more first magnetic elements (28) associated with the supporting body (6) and one or more second magnetic elements (27) associated with the second coupling part (16);
the first magnetic elements (28) are arranged to cooperate magnetically with the second magnetic elements (27) when the filter-holder (7) is in, or is about to assume, the insertion configuration.

9. The coffee machine (1) of claim **8,** wherein the filter-holder (7) comprises a cup-shaped body (10) having a bottom wall and an open end delimited by an edge (15), and the supporting body (6) comprises a brewing hot water outlet and a seal (23) surrounding the brewing hot water outlet;
the first coupling part (24) comprises a number of first projections (24) and the second coupling part (16) comprises a number of second projections (16);
the second projections (16) are arranged on the filter-holder (7) so as to fail to interfere with the first projections (24) when the filter-holder (7) is in the insertion configuration and to slidably cooperate with the first projections (24) during relative rotation of the first coupling part (24) and the second coupling part (16);
the first projections (24) and the second projections (16) are so shaped as to cause, during the relative rotation, the filter-holder (7) and the supporting body (6) to move one towards the other so that, in the tight-coupling configuration, the edge (15) of the filter-holder (7) is fluid-tightly pressed against the seal (23);
the first magnetic elements (28) are arranged on the bottom wall of the cup-shaped body (10), between the first projections (24), and the second magnetic elements (27) are carried by respective fins (16) in positions such that, when the filter-holder (7) is approached to the supporting body (6), the first magnetic elements (28) face corresponding second magnetic elements (27).

10. The coffee machine (1) of any one of the preceding claims, wherein the ring nut (30) has a toothing (32), and the automation device (29) comprises an electric actuator (34) and a gear transmission (35) to kinematically couple the electric motor (34) and the ring nut (30).

11. The coffee machine (1) of any one of the preceding claims, wherein, in the tight-coupling configuration, the filter-holder (7) and the supporting body (6) are fluid-tightly coupled.

12. The coffee machine (1) of any one of the preceding claims, further comprising a frame (2) on which the supporting body (6) is mounted;
the automation device (29) further comprises a user interface (40) configured to sense one or different actions by a user on the filter-holder (7) or one or different forces applied to the frame (2) by a user either directly or indirectly, through the filter-holder (7), and to cause the coupling device (17) to tight-couple and uncouple in response to sensed actions or forces.

13. The coffee machine (1) of claim **12,** wherein the user interface (40) is configured to sense either one or more of the following actions by a user on the filter-holder (7): rightwards, leftwards, upwards, and downwards, or one or more forces applied directly by a user on one or different areas of the frame (2).

14. The coffee machine (1) of claim **13,** wherein the user interface (40) is further configured to sense either actions by a user on the filter-holder (7) either rightwards and leftwards or upwards and downwards, or forces applied directly by a user on areas of the frame (2) on opposite sides of the supporting body (6).

15. The coffee machine (1) of any one of claims **12** to **14,** wherein the user interface (40) is further configured to also cause beverage delivery to start and stop in response to sensed actions or forces.

## Patentansprüche

1. Kaffeemaschine (1), umfassend:
einen Trägerkörper (6), der dazu ausgestaltet ist, heißes Wasser zur Herstellung eines Getränks zu liefern;
einen Filterhalter (7), der so ausgestaltet ist, dass er mit einem Brühmaterial befüllbar ist und lösbar mit dem Trägerkörper (6) gekoppelt werden kann, um von diesem heißes Wasser zum Brühen des Brühmaterials und zur Herstellung eines Getränks zu empfangen;
eine Kupplungsvorrichtung (17), die ein erstes Kupplungsteil (24), das an dem Trägerkörper (6) montiert ist, und ein zweites Kupplungsteil (16), das von dem Filterhalter (7) getragen wird, umfasst; wobei die Kupplungsvorrichtung (17) konfiguriert ist, um zu bewirken, dass der Filterhalter (7) eine Dichtkupplungskonfiguration einnimmt, in der der Filterhalter (7) mit dem Trägerkörper (6) dicht gekoppelt ist, ausgehend von einer Einsetzkonfiguration, in der der Filterhalter (7) lose in den Trägerkörper (6) eingesetzt ist, infolge einer relativen Drehung des ersten Kupplungsteils (24) und des zweiten Kupplungsteils (16); und
eine Automatisierungsvorrichtung (29), die so konfiguriert ist, dass sie das erste Kupplungsteil (24) und das zweite Kupplungsteil (16) veranlasst, sich zumindest teilweise automatisch relativ zueinander zu drehen; die Automatisierungsvorrichtung (29) umfasst ein motorisiertes Element (30), das so betätigbar ist, dass es das erste Kupplungsteil (24) und das zweite Kupplungsteil (16) um eine Achse (20) des Trägerkörpers (6) und in entgegengesetzten Drehrichtungen relativ zueinander dreht;
**dadurch gekennzeichnet, dass** das erste Kupplungsteil (24) einstückig mit dem Trägerkörper (6) ausgebildet ist und das motorisierte Element (30) eine Ringmutter (30) umfasst, die drehbar auf dem Trägerkörper (6) montiert ist, um sich um die Achse (20) zu drehen, und so ausgestaltet ist, dass sie mit dem Filterhalter (7) gekoppelt werden kann, wenn sich der Filterhalter (7) in der Einsetzkonfiguration befindet, um winkelmäßig einstückig mit dem Filterhalter (7) zu werden;
und **dadurch, dass** die Ringmutter (30) betätigbar ist, um das zweite Kupplungsteil (16) relativ zu dem ersten Kupplungsteil (24) zu drehen, um den Filterhalter (7) von der Einsetzkonfiguration in die Dichtkupplungskonfiguration und umgekehrt zu bewegen.

2. Kaffeemaschine (1) nach Anspruch **1,** wobei die Ringmutter (30) einen Sitz (38; 39) umfasst, der so konfiguriert ist, dass er, wenn sich der Filterhalter (7) in der Einsetzkonfiguration befindet, mit einem Teil des Filterhalters (7) in Eingriff gebracht werden kann, um zu bewirken, dass der Filterhalter (7) und die Ringmutter (30) winkelmäßig einstückig werden.

3. Kaffeemaschine (1) nach Anspruch **2,** wobei der Sitz (38) durch eine Gabel (38) definiert ist, die einstückig mit der Ringmutter (30) ausgebildet ist und so konfiguriert ist, dass sie rittlings auf einem Griff (11) des Filterhalters (7) angeordnet werden kann, wenn sich der Filterhalter (7) in der Einsetzkonfiguration befindet, um zu bewirken, dass der Filterhalter (7) und die Ringmutter (30) winkelmäßig einstückig werden.

4. Kaffeemaschine (1) nach Anspruch **2,** wobei der Sitz (39) durch eine Tasche (39) definiert ist, die einstückig mit der Ringmutter (30) ausgebildet ist und so konfiguriert ist, dass sie mit dem zweiten Kupplungsteil (16) des Filterhalters (7) in Eingriff gebracht werden kann, wenn sich der Filterhalter (7) in der Einsetzkonfiguration befindet, um zu bewirken, dass der Filterhalter (7) und die Ringmutter (30) winkelmäßig einstückig werden.

5. Kaffeemaschine (1), umfassend:
einen Trägerkörper (6), der dazu ausgestaltet ist, heißes Wasser zur Herstellung eines Getränks zu liefern;
einen Filterhalter (7), der so ausgestaltet ist, dass er mit einem Brühmaterial befüllbar ist und lösbar mit dem Trägerkörper (6) gekoppelt werden kann, um von diesem heißes Wasser zum Brühen des Brühmaterials und zur Herstellung eines Getränks zu empfangen;
eine Kupplungsvorrichtung (17), die ein erstes Kupplungsteil (24), das an dem Trägerkörper (6) montiert ist, und ein zweites Kupplungsteil (16), das von dem Filterhalter (7) getragen wird, umfasst; wobei die Kupplungsvorrichtung (17) konfiguriert ist, um zu bewirken, dass der Filterhalter (7) eine Dichtkupplungskonfiguration einnimmt, in der der Filterhalter (7) mit dem Trägerkörper (6) dicht gekoppelt ist, ausgehend von einer Einsetzkonfiguration, in der der Filterhalter (7) lose in den Trägerkörper (6) eingesetzt ist, infolge einer relativen Drehung des ersten Kupplungsteils (24) und des zweiten Kupplungsteils (16); und
eine Automatisierungsvorrichtung (29), die so konfiguriert ist, dass sie das erste Kupplungsteil (24) und das zweite Kupplungsteil (16) veranlasst, sich zumindest teilweise automatisch relativ zueinander zu drehen; die Automatisierungsvorrichtung (29) umfasst ein motorisiertes Element (30), das so betätigbar ist, dass es das erste Kupplungsteil (24) und das zweite Kupplungsteil (16) um eine Achse (20) des Trägerkörpers (6) und in entgegengesetzten Drehrichtungen relativ zueinander dreht;
**dadurch gekennzeichnet, dass**
das motorisierte Element (30) eine Ringmutter (30) umfasst, die drehbar auf dem Trägerkörper (6) montiert ist, um sich um die Achse (20) zu drehen, und das erste Kupplungsteil (24) trägt;
die Ringmutter (30) betätigbar ist, um das erste Kupplungsteil (24) relativ zu dem zweiten Kupplungsteil (16) zu drehen, um zu bewirken, dass der Filterhalter (7) ausgehend von der Einführkonfiguration völlig automatisch die Dichtkupplungskonfiguration einnimmt und umgekehrt;
die Ringmutter (30) winkelmäßig um die Achse (20) ausgerichtet ist, so dass es erlaubt wird, dass der Filterhalter (7) in der Einsetzkonfiguration durch eine Aufwärtsbewegung des Filterhalters (7) ausschließlich entlang der Achse (20) in Richtung des Trägerkörpers (6) manuell anordenbar ist.

6. Kaffeemaschine (1) nach Anspruch 5, wobei der Trägerkörper (6) so geformt ist, dass er mit dem zweiten Kupplungsteil (16) zusammenwirkt, wenn sich der Filterhalter (7) in der Einsetzkonfiguration befindet, um im Wesentlichen zu verhindern, dass sich der Filterhalter (7) während der Drehung der Ringmutter (30) um die Achse (20) dreht, um in Bezug auf einen Bediener sowohl in der Einsetzkonfiguration als auch in der Dichtkupplungskonfiguration eine und dieselbe Konfiguration einzunehmen.

7. Kaffeemaschine (1) nach Anspruch 5 oder 6, wobei die Ringmutter (30) winkelmäßig um die Achse (20) ausgerichtet ist, so dass sowohl in der Einsetzkonfiguration als auch in der Dichtkupplungskonfiguration der Filterhalter (7) in Bezug auf einen Bediener eine frontale Konfiguration einnimmt, in der ein Griff (11) des Filterhalters (7) in Bezug auf den Bediener frontal angeordnet ist.

8. Kaffeemaschine (1) nach einem der vorhergehenden Ansprüche, ferner umfassend eine magnetische Positioniervorrichtung (26), die dazu ausgestaltet ist, das Positionieren des Filterhalters (7) in der Einsetzkonfiguration zu erleichtern, wenn er dem Trägerkörper (6) angenähert wird;
die Positioniervorrichtung (26) ein oder mehrere erste Magnetelemente (28), die mit dem Trägerkörper (6) assoziiert sind, und ein oder mehrere zweite Magnetelemente (27), die mit dem zweiten Kupplungsteil (16) assoziiert sind, umfasst;
die ersten Magnetelemente (28) so angeordnet sind, dass sie magnetisch mit den zweiten Magnetelementen (27) zusammenwirken, wenn sich der Filterhalter (7) in der Einsetzkonfiguration befindet oder im Begriff ist, diese einzunehmen.

9. Kaffeemaschine (1) nach Anspruch **8,** wobei der Filterhalter (7) einen becherförmigen Körper (10) mit einer Bodenwand und einem offenen Ende umfasst, das durch einen Rand (15) begrenzt ist, und der Trägerkörper (6) einen Brühheißwasserauslass und eine Dichtung (23) umfasst, die den Brühheißwasserauslass umgibt;
das erste Kupplungsteil (24) eine Anzahl von ersten Vorsprüngen (24) umfasst und das zweite Kupplungsteil (16) eine Anzahl von zweiten Vorsprüngen (16) umfasst;
die zweiten Vorsprünge (16) an dem Filterhalter (7) so angeordnet sind, dass sie nicht mit den ersten Vorsprüngen (24) interferieren, wenn sich der Filterhalter (7) in der Einsetzkonfiguration befindet, und dass sie mit den ersten Vorsprüngen (24) während der relativen Drehung des ersten Kupplungsteils (24) und des zweiten Kupplungsteils (16) verschiebbar zusammenwirken;
die ersten Vorsprünge (24) und die zweiten Vorsprünge (16) so geformt sind, dass sie bewirken, dass sich der Filterhalter (7) und der Trägerkörper (6) während der relativen Drehung aufeinander bewegen, so dass in der Dichtkupplungskonfiguration der Rand (15) des Filterhalters (7) fluiddicht gegen die Dichtung (23) gedrückt wird;
die ersten Magnetelemente (28) an der Bodenwand des becherförmigen Körpers (10) zwischen den ersten Vorsprüngen (24) angeordnet sind und die zweiten Magnetelemente (27) von jeweiligen Rippen (16) in Positionen getragen werden, so dass, wenn der Filterhalter (7) an den Trägerkörper (6) angenähert wird, die ersten Magnetelemente (28) entsprechenden zweiten Magnetelementen (27) zugewandt sind.

10. Kaffeemaschine (1) nach einem der vorhergehenden Ansprüche, wobei die Ringmutter (30) eine Verzahnung (32) aufweist und die Automatisierungsvorrichtung (29) einen elektrischen Stellantrieb (34) und ein Zahnradgetriebe (35) umfasst, um den Elektromotor (34) und die Ringmutter (30) kinematisch zu koppeln.

11. Kaffeemaschine (1) nach einem der vorhergehenden Ansprüche, wobei in der Dichtkupplungskonfiguration der Filterhalter (7) und der Trägerkörper (6) fluiddicht gekoppelt sind.

12. Kaffeemaschine (1) nach einem der vorhergehenden Ansprüche, ferner umfassend einen Rahmen (2), an dem der Trägerkörper (6) montiert ist;
die Automatisierungsvorrichtung (29) ferner eine Benutzerschnittstelle (40) umfasst, die so konfiguriert ist, dass sie eine oder verschiedene Aktionen eines Benutzers an dem Filterhalter (7) oder eine oder verschiedene Kräfte, die von einem Benutzer entweder direkt oder indirekt über den Filterhalter (7) auf dem Rahmen (2) ausgeübt werden, erfasst und die Kupplungsvorrichtung (17) veranlasst wird, als Reaktion auf erfasste Aktionen oder Kräfte dicht zu koppeln und zu entkoppeln.

13. Kaffeemaschine (1) nach Anspruch 12, wobei die Benutzerschnittstelle (40) konfiguriert ist, um entweder eine oder mehrere der folgenden Aktionen durch einen Benutzer an dem Filterhalter (7) zu erfassen: nach rechts, nach links, nach oben und nach unten oder eine oder mehrere Kräfte, die direkt von einem Benutzer auf einen oder verschiedene Bereiche des Rahmens (2) ausgeübt werden.

14. Kaffeemaschine (1) nach Anspruch **13,** wobei die Benutzerschnittstelle (40) ferner dazu konfiguriert ist, entweder Aktionen eines Benutzers an dem Filterhalter (7) entweder nach rechts und links oder nach oben und nach unten oder Kräfte, die direkt von einem Benutzer auf Bereiche des Rahmens (2) auf gegenüberliegenden Seiten des Trägerkörpers (6) ausgeübt werden, zu erfassen.

15. Kaffeemaschine (1) nach einem der Ansprüche **12** bis **14,** wobei die Benutzerschnittstelle (40) ferner konfiguriert ist, um auch zu bewirken, dass die Getränkeabgabe als Reaktion auf erfasste Aktionen oder Kräfte startet und stoppt.

## Revendications

1. Machine à café (1) comprenant :
un corps de support (6) conçu pour fournir de l'eau chaude pour la production d'une boisson ;
un porte-filtre (7) conçu pour être rempli d'une matière de brassage et pour être couplé de manière amovible au corps de support (6) afin de recevoir de l'eau chaude de celui-ci pour brasser la matière de brassage et produire une boisson ;
un dispositif de couplage (17) comprenant une première partie de couplage (24) montée sur le corps de support (6) et une seconde partie de couplage (16) portée par le porte-filtre (7) ; le dispositif de couplage (17) est configuré pour amener le porte-filtre (7) à adopter une configuration de couplage serré, dans laquelle le porte-filtre (7) est étroitement couplé au corps de support (6), à partir d'une configuration d'insertion, dans laquelle le porte-filtre (7) est librement inséré dans le corps de support (6), à la suite d'une rotation relative de la première partie de couplage (24) et de la seconde partie de couplage (16) ; et
un dispositif d'automatisation (29) configuré pour provoquer la rotation relative, au moins partiellement automatique, de la première partie de couplage (24) et de la seconde partie de couplage (16) ; le dispositif d'automatisation (29) comprend un élément motorisé (30) pouvant fonctionner pour faire tourner relativement la première partie de couplage (24) et la seconde partie de couplage (16) autour d'un axe (20) du corps de support (6) et dans des sens de rotation opposés ;
**caractérisée en ce que** la première partie de couplage (24) est solidaire du corps de support (6) et l'élément motorisé (30) comprend un écrou à anneau (30), qui est monté de façon rotative sur le corps de support (6) pour tourner autour de l'axe (20) et est conçu pour être couplé au porte-filtre (7), lorsque le porte-filtre (7) se trouve dans la configuration d'insertion, de manière à devenir angulairement solidaire du porte-filtre (7) ;
et **en ce que** l'écrou à anneau (30) peut fonctionner pour faire tourner la seconde partie de couplage (16) par rapport à la première partie de couplage (24) de manière à déplacer le porte-filtre (7) de la configuration d'insertion à la configuration de couplage serré, et vice versa.

2. Machine à café (1) selon la revendication **1,** l'écrou à anneau (30) comprenant un siège (38 ; 39) configuré pour être mis en prise, lorsque le porte-filtre (7) se trouve dans la configuration d'insertion, avec une partie du porte-filtre (7) de manière à ce que le porte-filtre (7) et l'écrou annulaire (30) deviennent angulairement solidaires.

3. Machine à café (1) selon la revendication **2,** le siège (38) étant défini par une fourche (38) solidaire de l'écrou à anneau (30) et est configuré pour être disposé à cheval sur une poignée (11) du porte-filtre (7), lorsque le porte-filtre (7) se trouve dans la configuration d'insertion, de manière à ce que le porte-filtre (7) et l'écrou annulaire (30) deviennent angulairement solidaires.

4. Machine à café (1) selon la revendication **2,** le siège (39) étant défini par une poche (39) solidaire de l'écrou à anneau (30) et étant configuré pour être mis en prise avec la seconde partie de couplage (16) du porte-filtre (7) lorsque le porte-filtre (7) se trouve dans la configuration d'insertion de manière à ce que le porte-filtre (7) et l'écrou annulaire (30) deviennent angulairement solidaires.

5. Machine à café (1) comprenant :
un corps de support (6) conçu pour fournir de l'eau chaude pour la production d'une boisson ;
un porte-filtre (7) conçu pour être rempli d'une matière de brassage et pour être couplé de manière amovible au corps de support (6) afin de recevoir de l'eau chaude de celui-ci pour brasser la matière de brassage et produire une boisson ;
un dispositif de couplage (17) comprenant une première partie de couplage (24) montée sur le corps de support (6) et une seconde partie de couplage (16) portée par le porte-filtre (7) ; le dispositif de couplage (17) est configuré pour faire adopter au porte-filtre (7) une configuration de couplage serré, dans laquelle le porte-filtre (7) est étroitement couplé au corps de support (6), à partir d'une configuration d'insertion, dans laquelle le porte-filtre (7) est inséré librement dans le corps de support (6), à la suite d'une rotation relative de la première partie de couplage (24) et de la seconde partie de couplage (16) ; et
un dispositif d'automatisation (29) configuré pour provoquer la rotation relative, au moins partiellement automatique, de la première partie de couplage (24) et de la seconde partie de couplage (16) ; le dispositif d'automatisation (29) comprend un élément motorisé (30) pouvant fonctionner pour faire tourner relativement la première partie de couplage (24) et la seconde partie de couplage (16) autour d'un axe (20) du corps de support (6) et dans des sens de rotation opposés ;
**caractérisée en ce que**
l'élément motorisé (30) comprend un écrou à anneau (30) qui est monté de façon rotative sur le corps de support (6) pour tourner autour de l'axe (20) et qui porte la première partie de couplage (24) ;
l'écrou à anneau (30) peut fonctionner pour faire tourner la première partie de couplage (24) par rapport à la seconde partie de couplage (16) afin que le porte-filtre (7) adopte automatiquement la configuration de couplage serré à partir de la configuration d'insertion, et vice versa ;
l'écrou à anneau (30) est orientée angulairement autour de l'axe (20) de manière à permettre au porte-filtre (7) de pouvoir être disposé manuellement dans la configuration d'insertion par un mouvement vers le haut du porte-filtre (7) exclusivement le long de l'axe (20) vers le corps de support (6).

6. Machine à café (1) selon la revendication **5,** le corps de support (6) étant façonné de manière à coopérer avec la seconde partie de couplage (16) lorsque le porte-filtre (7) se trouve dans la configuration d'insertion, de manière à empêcher sensiblement le porte-filtre (7) de tourner autour de l'axe (20) pendant la rotation de l'écrou à anneau (30), afin d'adopter une seule et même configuration par rapport à un opérateur à la fois dans la configuration d'insertion et dans la configuration de couplage serré.

7. Machine à café (1) selon la revendication **5** ou **6,** l'écrou à anneau (30) étant orientée angulairement autour de l'axe (20) de manière à ce que, tant dans la configuration d'insertion que dans la configuration de couplage serré, le porte-filtre (7) adopte, par rapport à un opérateur, une configuration frontale, dans laquelle une poignée (11) du porte-filtre (7) est disposée de manière frontale par rapport à l'opérateur.

8. Machine à café (1) selon l'une quelconque des revendications précédentes, comprenant en outre un dispositif de positionnement magnétique (26) conçu pour faciliter le positionnement du porte-filtre (7) dans la configuration d'insertion lorsqu'il est approché du corps de support (6) ;
le dispositif de positionnement (26) comprend un ou plusieurs premiers éléments magnétiques (28) associés au corps de support (6) et un ou plusieurs seconds éléments magnétiques (27) associés à la seconde partie de couplage (16) ;
les premiers éléments magnétiques (28) sont disposés pour coopérer magnétiquement avec les seconds éléments magnétiques (27) lorsque le porte-filtre (7) se trouve dans la configuration d'insertion ou est sur le point de l'adopter.

9. Machine à café (1) selon la revendication **8,** le porte-filtre (7) comprenant un corps en forme de coupe (10) comportant une paroi inférieure et une extrémité ouverte délimitée par un bord (15), et le corps de support (6) comprenant une sortie d'eau chaude de brassage et un joint (23) entourant la sortie d'eau chaude de brassage ;
la première partie de couplage (24) comprend un certain nombre de premières saillies (24) et la seconde partie de couplage (16) comprend un certain nombre de secondes saillies (16) ;
les secondes saillies (16) sont disposées sur le porte-filtre (7) de manière à ne pas interférer avec les premières saillies (24), lorsque le porte-filtre (7) se trouve dans la configuration d'insertion, et à coopérer de manière coulissante avec les premières saillies (24) pendant la rotation relative de la première partie de couplage (24) et de la seconde partie de couplage (16) ;
les premières saillies (24) et les secondes saillies (16) sont façonnées de manière à provoquer, lors de la rotation relative, le déplacement du porte-filtre (7) et du corps de support (6) l'un vers l'autre, de sorte que, dans la configuration de couplage serré, le bord (15) du porte-filtre (7) est pressé de manière étanche au fluide contre le joint (23) ;
les premiers éléments magnétiques (28) sont disposés sur la paroi inférieure du corps en forme de coupe (10), entre les premières saillies (24), et les seconds éléments magnétiques (27) sont portés par des ailettes respectives (16) dans des positions telles que, lorsque le porte-filtre (7) est approché du corps de support (6), les premiers éléments magnétiques (28) font face aux seconds éléments magnétiques correspondants (27).

10. Machine à café (1) selon l'une quelconque des revendications précédentes, l'écrou à anneau (30) comportant une denture (32), et le dispositif d'automatisation (29) comprenant un actionneur électrique (34) et une transmission à engrenage (35) pour coupler cinématiquement le moteur électrique (34) et l'écrou à anneau (30).

11. Machine à café (1) selon l'une quelconque des revendications précédentes, où, dans la configuration de couplage serré, le porte-filtre (7) et le corps de support (6) sont couplés de manière étanche aux fluides.

12. Machine à café (1) selon l'une quelconque des revendications précédentes, comprenant en outre un cadre (2) sur lequel est monté le corps de support (6) ;
le dispositif d'automatisation (29) comprend en outre une interface utilisateur (40) configurée pour détecter une ou plusieurs actions d'un utilisateur sur le porte-filtre (7) ou une ou plusieurs forces différentes appliquées au cadre (2) par un utilisateur, directement ou indirectement, par l'intermédiaire du porte-filtre (7), et pour faire en sorte que le dispositif de couplage (17) s'accouple de façon serrée et se désaccouple en réponse aux actions ou aux forces détectées.

13. Machine à café (1) selon la revendication **12,** l'interface utilisateur (40) étant configurée pour détecter une ou plusieurs des actions suivantes d'un utilisateur sur le porte-filtre (7) : vers la droite, vers la gauche, vers le haut et vers le bas, ou une ou plusieurs forces appliquées directement par un utilisateur sur une ou différentes zones du cadre (2).

14. Machine à café (1) selon la revendication **13,** l'interface utilisateur (40) étant en outre configurée pour détecter soit les actions d'un utilisateur sur le porte-filtre (7) vers la droite et la gauche ou vers le haut et le bas, soit les forces appliquées directement par un utilisateur sur des zones du cadre (2) sur les côtés opposés du corps de support (6).

15. Machine à café (1) selon l'une quelconque des revendications **12** à **14,** l'interface utilisateur (40) étant en outre configurée pour faire démarrer et arrêter la distribution de la boisson en réponse aux actions ou forces détectées.
